(19) Europäisches Patentamt
European Patent Office
Office européen des brevets

(11) EP 1 418 316 A1

(12) # EUROPEAN PATENT APPLICATION
published in accordance with Art. 158(3) EPC

(43) Date of publication:
**12.05.2004 Bulletin 2004/20**

(21) Application number: **02751653.3**

(22) Date of filing: **24.07.2002**

(51) Int Cl.7: **F01N 3/02**

(86) International application number:
**PCT/JP2002/007462**

(87) International publication number:
**WO 2003/012264 (13.02.2003 Gazette 2003/07)**

(84) Designated Contracting States:
**AT BE BG CH CY CZ DE DK EE ES FI FR GB GR IE IT LI LU MC NL PT SE SK TR**

(30) Priority: **26.07.2001 JP 2001226573**

(71) Applicant: **Mitsubishi Jidosha Kogyo Kabushiki Kaisha**
**Tokyo 108-8410 (JP)**

(72) Inventors:
- **TANAKA, Tamon,**
**c/o MITSUBISHI JIDOSHA K.K.K.**
**Minato-ku, Tokyo 108-8410 (JP)**
- **NISHIHARA, Setsuo,c/o MITSUBISHI JIDOSHA K.K.K.**
**Minato-ku, Tokyo 108-8410 (JP)**

(74) Representative: **Modiano, Guido, Dr.-Ing. et al**
**Modiano, Josif, Pisanty & Staub,**
**Baaderstrasse 3**
**80469 München (DE)**

(54) **EXHAUST EMISSION CONTROL DEVICE**

(57) An exhaust purification device incinerates particulates, collected by the DPF, always in an appropriate combustion state, thereby surely regenerating a DPF without melting down the DPF. An ECU of the device estimates the amount of the particulates collected by the DPF (S6), selects a map according to whether the collection amount is appropriate or excessive (S8), determines a target oxygen amount from a DPF temperature on the basis of the selected map (S10 and S12), and feedbacks the oxygen amount in exhaust gas to the target oxygen amount (S20). Since the particulate collection amount is reflected in control of the oxygen amount, the particulates can be incinerated always in the appropriate combustion state regardless of the particulate collection amount.

FIG. 2

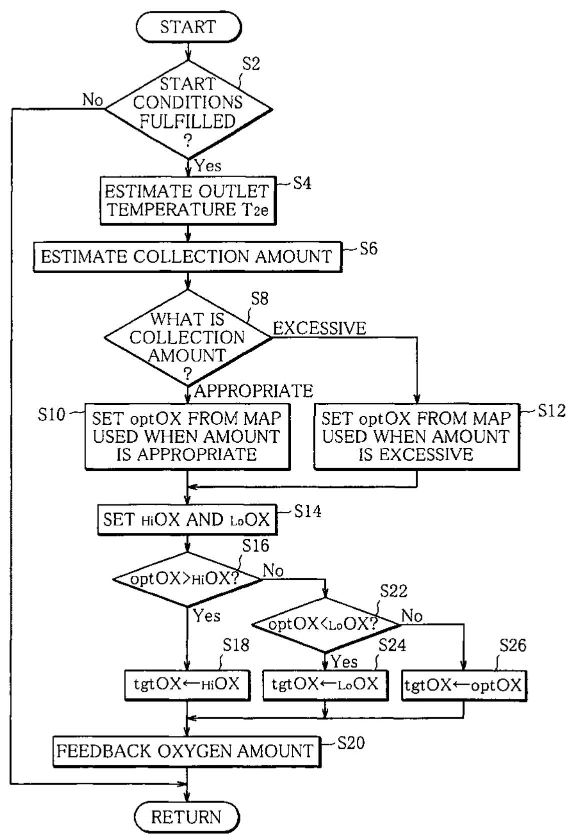


EP 1 418 316 A1

## Description

### Background Art

This invention relates to an exhaust purification device having a filter for collecting particulates contained in exhaust gas, and more particularly, to an exhaust purification device that is capable of properly regenerating such filter.

The exhaust gas discharged from a diesel engine (hereinafter referred to as engine) serving as an internal combustion engine contains a large amount of particulates in addition to HC, CO, $NO_x$, and the like. Proposed as an after-treatment device for treating the particulates is an exhaust purification device that traps the particulates contained in the exhaust gas by means of a diesel particulate filter (DPF) to incinerate the particulates. The particulate incineration on the DPF is naturally performed even in normal operation as long as a DPF temperature is higher than or equal to the predetermined temperature. However, if the engine continuously runs in the state where the above condition is not fulfilled, the amount of the particulates collected by the DPF exceeds an allowable value before the particulates are incinerated, which may cause a problem that the exhaust pressure of the engine increases to result in degraded engine performance, etc. Therefore, practiced in general is the forced regeneration control that actively raises the DPF temperature to promote the particulate incineration, namely, the regeneration of the DPF.

The forced regeneration control should be carried out, whenever the particulate collection amount, which is estimated from the front-rear differential pressure of the DPF, the volume of the exhaust gas flow, etc., reaches the predetermined value. However, the forced regeneration control is generally withheld when the engine is operated under conditions unsuitable for particulate incineration due to a low exhaust temperature, for example, when the engine is operated in a cold state or with a low load and low torque.

More detail about the forced regeneration control will be described below. In an exhaust purification device disclosed for example in Examined Japanese Utility Model Publication No. 5-3694, an exhaust temperature is kept equal to or higher than a catalyst activation temperature during the forced regeneration control, to attain the filter temperature suitable for the particulate incineration. This exhaust purification device comprises a pump for introducing air to the upstream of a filter in an exhaust passage, and during the forced regeneration control, the quantity of air introduced through the pump is controlled to maintain the oxygen concentration in exhaust gas between the lower limit oxygen concentration (regeneration limit oxygen concentration) and the upper limit oxygen concentration, to thereby supply the oxygen required for the particulate incineration.

However, the amount of the oxygen required for the particulate incineration is not necessarily constant. For instance, a high filter temperature promotes the particulate incineration on the filter, which reduces the required oxygen amount. The required oxygen amount is also reduced, if the forced regeneration control is continuously withheld in a long period, and as a result, the amount of the particulates collected by the filter increases.

In this regard, the above-mentioned exhaust purification device is merely designed to control the oxygen concentration and the exhaust temperature based on the lower and upper limit oxygen concentrations which are fixedly determined, and there is fear that the oxygen amount suitable for the filter temperature and the particulate collection amount cannot be supplied to the filter. For example, even if the particulate collection amount is excessive, the exhaust temperature and the oxygen concentration are controlled in the same manner as in normal conditions. As a result, there is fear that the burning of the particulates rapidly proceeds, and the DPF is melted down by a large quantity of the discharged heat.

In addition, even if the exhaust temperature is controlled as in the exhaust purification device disclosed in the above publication, there is no guarantee that the DPF temperature can be finely controlled since the DPF temperature follows the exhaust temperature after some delay due to the effect of heat capacity of the DPF. The delay in control over the DPF temperature is noticeable in a transient state, such as a state of rapid acceleration, rapid deceleration, or the like. This makes it impossible to obtain the desired burning state of the particulates, resulting in the meltdown of the DPF or the incomplete regeneration thereof.

### Disclosure of the Invention

An object of the present invention is to provide an exhaust purification device capable of appropriately regenerating a filter without melting down the filter.

To achieve the object, the present invention provides an exhaust purification device, having a filter disposed in an exhaust passage of an internal combustion engine for collecting particulates contained in an exhaust gas, and an oxygen supply amount-adjusting device capable of adjusting an oxygen amount supplied to the filter, which comprises a temperature-estimating device for detecting or estimating a temperature of or near the filter, and in which the oxygen supply amount-adjusting device adjusts the oxygen supply amount to a value between lower and upper regeneration limit oxygen amounts that are determined on the basis of the filter temperature.

According to the exhaust purification device of the present invention, the oxygen supply amount is adjusted to a value between the lower and upper regeneration limit oxygen amounts determined based on the filter temperature. The lower regeneration limit oxygen amount corresponds to a lower limit of the oxygen supply amount which does not cause, for example, an oxygen deficiency that makes the filter regeneration difficult or causes harmful effects on engine operation (such as smoke generation). On the other hand, the upper regeneration limit oxygen amount corresponds to an upper limit of the oxygen supply amount which does not cause, for example, oversupply of oxygen resulting in meltdown of the filter or harmful effects on the engine operation (for example, misfire in the internal combustion engine, noisy engine operation, and deterioration of engine performance (drivability)).

According to the present invention, the adjustment of the oxygen supply amount makes it possible to supply to the filter an appropriate amount of oxygen based on the filter temperature. Thus, it is also possible to regenerate the filter in the constant presence of oxygen of an appropriate amount regardless of the filter temperature, while preventing harmful effects caused by the deficiency or oversupply of oxygen (such as smoke generation, misfire, meltdown of the filter, and the like).

It is preferable in the present invention that the oxygen supply amount-adjusting device determine the oxygen supply amount on the basis of residual oxygen amount in the exhaust gas, which corresponds to combustion state of the internal combustion engine.

In this preferred mode, the oxygen amount supplied to the filter is adjusted in light of the residual oxygen amount in the exhaust gas. By taking into account of the residual oxygen amount in the exhaust gas, which changes according to the combustion state of the engine, it is possible to more appropriately adjust the oxygen amount supplied to the filter, since unconsumed air is discharged from the internal combustion engine to become residual oxygen in the exhaust gas to thereby compose at least part of the oxygen amount supplied to the filter, although most of intake air supplied to the internal combustion engine is used for and consumed by fuel combustion.

It is preferable in this invention that the oxygen supply amount-adjusting device determine the optimum oxygen amount between the lower and upper regeneration limit oxygen amounts on the basis of the filter temperature, and adjust the oxygen supply amount so that the oxygen supply amount is equal to or close to the optimum oxygen amount.

According to this preferred mode, it is possible to optimize the oxygen amount supplied to the filter to thereby more satisfactorily perform the filter regeneration, while more surely preventing the harmful effects attributable to the deficiency or oversupply of oxygen.

Preferably, the optimum oxygen amount is set at a value near an intermediate value between the lower and upper regeneration limit oxygen amounts or a value closer to the lower regeneration limit oxygen amount than to the intermediate value.

In this case, by adjusting the oxygen amount supplied to the filter to a value near the intermediate value between the lower and upper regeneration limit oxygen amounts, it is possible to eliminate or largely reduce fear of generating the harmful effects produced by the deficiency or oversupply of oxygen, and especially, fear of the meltdown of the filter due to the oversupply of oxygen.

In the preferred mode designed to determine the optimum oxygen amount, it is preferable that the optimum oxygen amount have a predetermined range between a first optimum oxygen amount and a second optimum oxygen amount that is larger than the first one, and that the oxygen supply amount-adjusting device determine the oxygen supply amount based on the residual oxygen amount in the exhaust gas, which corresponds to the combustion state of the internal combustion engine, and, if the oxygen supply amount is outside the predetermined range of the optimum oxygen amount, adjust the oxygen supply amount to either the first or the second optimum oxygen amount, whichever is closer to the oxygen supply amount.

In the further preferred mode described above, it is possible to optimize the oxygen amount supplied to the filter and satisfactorily regenerate the filter since the oxygen supply amount is adjusted to be in the predetermined range of the optimum oxygen amount after determining the oxygen supply amount in view of the residual oxygen amount in the exhaust gas. At a time of the adjustment of the oxygen supply amount, if the oxygen supply amount corresponding to the residual oxygen amount in the exhaust gas is outside the predetermined range of the optimum oxygen amount, a minimum adjustment is made so that the oxygen supply amount is in the predetermined range. On the contrary, if the oxygen supply amount is in the predetermined range of the optimum oxygen amount, no adjustment is performed. In this manner, the adjustment of the oxygen supply amount is carried out at a minimum, so that it is possible to reduce changes in the engine operation state, which occur due to the filter regeneration, and to eliminate or greatly reduce fear of hindering smooth engine operation.

In the preferred mode designed to determine the optimum oxygen amount, it is preferable that the oxygen supply amount-adjusting device determine the first and the second residual oxygen amount in the exhaust gas, which correspond to the combustion states of the internal combustion engine operating at a lower limit air/fuel ratio and at an upper limit air/fuel ratio, respectively, compare the optimum oxygen amount with the first and the second residual oxygen amount, and adjust the oxygen supply amount according to the result of the comparison.

According to this preferred mode, by performing the bare minimum adjustment of the oxygen supply amount at the time of the filter regeneration, it is possible to make the oxygen amount supplied to the filter close to the optimum oxygen amount, and to operate the internal combustion engine at an air/fuel ratio that is neither lower than the lower limit air/fuel ratio nor higher than the upper limit air/fuel ratio. Therefore, it is possible not only to satisfactorily regenerate the filter in the presence of oxygen of an appropriate amount but also, for example, to smoothly operate the internal combustion engine even in the middle of the filter regeneration by setting the lower and upper limit air/fuel ratios so as to respectively correspond to lower and upper limits of an air/fuel ratio region capable of maintaining the smooth engine operation.

In the preferred mode described above, it is preferable that the oxygen supply amount-adjusting device adjust the oxygen supply amount to the optimum oxygen amount if the optimum oxygen amount is between the first and second residual oxygen amounts, and adjust the oxygen supply amount to either the first or the second residual oxygen amount, whichever is closer to the optimum oxygen amount, if the optimum oxygen amount is not between the first and second residual oxygen amounts. Moreover, if the optimum oxygen amount is not between the first and second residual oxygen amounts and if the first and the second residual oxygen amount are not between the lower and upper regeneration limit oxygen amounts, the oxygen supply amount is adjusted to either the lower or the upper regeneration limit oxygen amount, whichever is closer to the first or the second residual oxygen amount.

In the further preferred mode described above, if the optimum oxygen amount is between the first and second residual oxygen amounts, the engine operation state is so changed as to obtain the optimum oxygen amount (for example, by varying the air/fuel ratio between the lower and upper limit air/fuel ratios) to optimize the oxygen amount supplied to the filter, which enables the optimum filter regeneration. In case that the optimum oxygen amount is not between the first and the second residual oxygen amount, and that the first or the second residual oxygen amount is between the lower and upper regeneration limit oxygen amounts, the engine operation state is so changed as to obtain the first or the second residual oxygen amount (for example, by operating the internal combustion engine at the lower or the upper limit air/fuel ratio), which enables the filter regeneration without spoiling the smoothness of the engine operation. Furthermore, in case that the optimum oxygen amount is not between the first and second residual oxygen amounts and that the first and the second residual oxygen amount are not between the lower and upper regeneration limit oxygen amounts, the filter regeneration can be performed by changing the engine operation state to obtain the lower or upper regeneration limit oxygen amount (for example, by adjusting the air/fuel ratio).

In this invention, it is preferable that the lower regeneration limit oxygen amount have a predetermined range between a first lower regeneration limit oxygen amount and a second lower regeneration limit oxygen amount that is larger than the first one, and that the upper regeneration limit oxygen amount have a predetermined range between a first upper regeneration limit oxygen amount and a second upper regeneration limit oxygen amount that is larger than the first one. It is preferable that the oxygen supply amount-adjusting device determine the oxygen supply amount on the basis of the residual oxygen amount in the exhaust gas, which corresponds to the combustion state of the internal combustion engine. It is also preferable that the oxygen supply amount-adjusting device adjust the oxygen supply amount to the first lower regeneration limit oxygen amount when the oxygen supply amount is smaller than the first lower regeneration limit oxygen amount, adjust the oxygen supply amount to the second lower regeneration limit oxygen amount when the oxygen supply amount is within the predetermined range of the lower regeneration limit oxygen amount, adjust the oxygen supply amount to the first upper regeneration limit oxygen amount when the oxygen supply amount is within the predetermined range of the upper regeneration limit oxygen amount, and adjust the oxygen supply amount to the second upper regeneration limit oxygen amount when the oxygen supply amount is larger than the second upper regeneration limit oxygen amount.

This preferred mode makes it possible to determine the oxygen supply amount in light of the residual oxygen amount in the exhaust gas, which reflects the combustion state, thereby to appropriately obtain and adjust the oxygen supply amount. Furthermore, depending on whether the oxygen supply amount is within the predetermined range of the lower regeneration limit oxygen amount determined by the first and the second lower regeneration limit oxygen amount, or whether the oxygen supply amount is within the predetermined range of the upper regeneration limit oxygen amount determined by the first and the second upper regeneration limit oxygen amount, the oxygen supply amount is adjusted to the first or the second lower regeneration limit oxygen amount, or the first or the second upper regeneration limit oxygen amount. Consequently, the adjustment of the oxygen supply amount can be suppressed to a minimum, and the change of the engine operation state, which is caused by the filter regeneration, can also be suppressed to a minimum.

In the present invention, it is preferable that the oxygen supply amount-adjusting device estimate an amount of particulates collected by the filter, and set the lower and upper regeneration limit oxygen amounts on the basis of the estimated particulate collection amount and the filter temperature.

According to this preferred mode, the lower and upper regeneration limit oxygen amounts are set, and by extension the oxygen amount supplied to the filter is set based on the filter temperature and the estimated particulate collection amount. This makes it possible to regenerate the filter in the constant presence of oxygen of the appropriate amount regardless of the filter temperature and the particulate collection amount, while avoiding harmful effects caused by the deficiency or oversupply of oxygen. Particularly, even if the particulate collection amount is large, the appropriate amount of oxygen can be supplied to the filter, and thus the filter meltdown attributable to the oversupply of oxygen can be surely prevented.

In this invention, it is preferable that the oxygen supply amount-adjusting device adjust the oxygen supply amount when the estimated particulate collection amount is larger than or equal to a predetermined amount and when the internal combustion engine is in the predetermined operation state.

According to the further preferred mode, if the internal combustion engine is in other operation state than the predetermined one, and there is fear that the filter cannot be thoroughly regenerated due to for example an extremely low filter temperature even in the presence of oxygen of the appropriate amount, the oxygen supply amount-adjusting device is rendered inoperative so that the filter regeneration is not performed. As a consequence, in some cases, the filter regeneration is not carried out, even if the estimated particulate collection amount is over the predetermined amount. However, once the internal combustion engine is subsequently operated in the predetermined operation state, it becomes possible to regenerate the filter in the presence of oxygen of the amount suitable for the estimated particulate collection amount, while avoiding harmful effects caused by the deficiency or oversupply of oxygen.

In the present invention, it is preferable that the temperature-estimating device estimate the temperature of or near the filter on the basis of a detection output of temperature-detecting device for detecting the temperature of or near the filter and a change of the detection output.

With the above preferred mode, the filter temperature estimated on the basis of the detection output and the change of the detection output is applied to the adjustment of the oxygen supply amount, without directly using, as the filter temperature, the detection output of temperature-detecting means for detecting the temperature of or near the filter. Thus, it is possible to remove an error in the detected temperature, attributable to an effect of response delay of the temperature-detecting means.

In this invention, preferably, the filter can be regenerated through an oxidative reaction of an oxidation catalyst disposed in the filter or in the exhaust passage at a location upstream of the filter.

According to the above preferred mode, the use of the oxidative reaction of the oxidation catalyst makes it possible, for example, to raise an exhaust temperature through exothermic heat caused by the oxidative reaction of the oxidation catalyst and thus heighten the filter temperature and to supply to the filter an oxidizing agent produced through the oxidization of constituents of the exhaust gas by the oxidation catalyst, thereby to enable the satisfactory filter regeneration.

**Brief Description of the Drawings**

Fig. 1 is a view of the overall structure of an exhaust purification device according to a first embodiment of the present invention;

Fig. 2 is a flowchart showing a particulate combustion control routine performed by an ECU shown in Fig. 1;

Fig. 3 is an explanatory diagram showing a relation between sensor detection value $T_2$ and DPF outlet temperature $T_{2e}$ obtained in a temperature rise;

Fig. 4 is an explanatory diagram showing a map for obtaining a response coefficient K on the basis of an exhaust gas flow rate V;

Fig. 5 is an explanatory diagram showing a map for setting an optimum oxygen amount for a case where a particulate collection amount is appropriate;

Fig. 6 is an explanatory diagram showing a map for setting an optimum oxygen amount for a case where the collection amount is excessive;

Fig. 7 is a view showing a DPF temperature-oxygen supply amount map used when the particulate collection amount is appropriate in the particulate combustion control that is performed in an exhaust purification device according to a second embodiment of the present invention;

Fig. 8 is a view showing a map used when the particulate collection amount is excessive;

Fig. 9 is a schematic block diagram showing an air/fuel ratio-calculating section and a residual oxygen amount-computing section of the ECU serving as an oxygen supply amount-adjusting device;

Fig. 10 is a view illustrating exemplified relations between residual oxygen amounts AA, BB respectively observed in combustions with lower and upper limit air/fuel ratios, and an optimum oxygen amount SS, a lower regeneration limit oxygen amount CC, and an upper regeneration limit oxygen amount DD;

Fig. 11 is a flowchart showing a part of the particulate combustion control routine according to the second embodiment;

Fig. 12 is a flowchart showing the rest of the control routine;

Fig. 13 is a view showing a DPF temperature-oxygen supply amount map used when the particulate collection amount is appropriate in the particulate combustion control that is performed in the exhaust purification device according to a third embodiment of the present invention;

Fig. 14 is a view showing a map used when the collection amount is excessive;

Fig. 15 is a schematic block diagram showing the air/fuel ratio-calculating section and the residual oxygen amount-computing section of the ECU serving as an oxygen supply amount-adjusting device;

Fig. 16 is a flowchart showing a part of the particulate combustion control routine according to the third embodiment;

Fig. 17 is a flowchart showing the rest of the control routine;

Fig. 18 is a view for explaining adjustment of the oxygen supply amount in a modification of the third embodiment; and

Fig. 19 is a view for explaining the adjustment of the oxygen supply amount in another modification.

**Best Mode of Carrying out the Invention**

In the following, an exhaust purification device according to a first embodiment of the present invention will be described that is applied to a common rail diesel engine (hereinafter referred to as engine) serving as an internal combustion engine.

In Fig. 1, an engine 1 is constructed, for example, as an in-line four-cylinder engine, and each cylinder thereof is provided with an electromagnetic fuel injection nozzle 2. Although not shown, the fuel injection nozzles 2 are connected to a common rail. When the fuel injection nozzle 2 opens, high pressure fuel accumulated in the common rail is injected from the fuel injection nozzle 2 into the combustion chamber.

The engine 1 is provided with an intake passage 3 in which an airflow sensor 4, a compressor 5a of a turbo charger 5, an inter cooler 6, and an intake throttle valve 7 are disposed in this order as viewed from upstream side. In an exhaust passage 8, there are disposed from the upstream side, a turbine 5b of the turbo charger 5, an oxidation catalyst 9, an upstream temperature sensor 10a, an upstream pressure sensor 11a, a DPF (diesel particulate filter) 12 serving as a filter, a downstream pressure sensor 11b, a downstream temperature sensor 10b, and an exhaust throttle valve 13. The compressor 5a and turbine 5b of the turbo charger 5 are coupled to a shaft.

The oxidation catalyst 9 and the DPF 12 constitute an after-treatment device 14 that is a so-called continuous regenerative DPF. The after-treatment device 14 is constructed to be capable of constantly and continuously incinerating particulates, collected by the DPF 12 located downstream, through an oxidative reaction of the oxidation catalyst 9.

The intake passage 3 has a portion located downstream of the intake throttle valve 7 and connected through an EGR passage 15 with that portion of the exhaust passage 8 which is upstream of the turbine 5b, so that exhaust gas flows back as EGR gas to the intake passage 3 via the EGR passage 15. The EGR passage 15 is provided with an EGR valve 16 and an EGR cooler 17, and a recirculation quantity of the EGR gas is adjusted according to the opening of the EGR valve 16.

Further, there is provided an ECU (electrical control unit) 21 which comprises an input/output device, a memory (ROM, RAM, etc.) for storing a control program, control maps, etc., a central processing unit (CPU), a timer counter, etc., none of which is shown. Connected to an input side of the ECU 21 are various sensors, such as an acceleration sensor 22 for detecting an accelerator operation amount θacc, a rotation speed sensor 23 for detecting an engine rotation speed Ne, the airflow sensor 4, upstream and downstream temperature sensors 10a and 10b serving as temperature-detecting devices, and pressure sensors 11a and 11b. Connected to an output side of the ECU 21 are various devices, such as the fuel injection nozzles 2, the intake throttle valve 7, the exhaust throttle valve 13, and the EGR valve 16.

On the basis of pieces of information detected by the sensors, the ECU 21 controls a fuel injection quantity and injection timing of the fuel injection nozzles 2, controls an intake air quantity by controlling the opening of the intake throttle valve 7, and controls an EGR recirculation quantity by controlling the opening of the EGR valve 16, thus operating the engine 1 in an appropriate zone.

With the intake air quantity and the EGR recirculation quantity being controlled by the ECU 21, an oxygen amount supplied to the DPF 12 changes. In other words, the ECU 21 cooperates with the intake throttle valve 7 and the EGR valve 16 to constitute an oxygen supply amount-adjusting device.

Particulates contained in the exhaust gas are trapped by the DPF 12 of the after-treatment device 14. When the oxidation catalyst 9 is activated so that DPF temperature becomes equal to or higher than a predetermined temperature (for example, 550°C), the collected particulates are consecutively incinerated on the DPF 12, which prevents the particulates from being discharged into the atmosphere. While the just-mentioned self-regeneration of the DPF is performed, the oxygen supply amount-adjusting device adjusts the oxygen amount supplied to the DPF 12 so as to appropriately regenerate the DPF 12.

If an operation state where such a consecutive regeneration function cannot be achieved is continued, the amount of the particulates collected by the DPF 12 gradually increases. In this embodiment, if the DPF temperature is for example below 550°C so that the self-regeneration of the DPF 12 is not satisfactorily performed, forced regeneration control is carried out to forcibly incinerate the particulates and the oxygen amount supplied to the DPF 12 is adjusted, when the particulate collection amount is larger than or equal to the predetermined amount and the exhaust temperature is higher than or equal to a predetermined temperature. On the contrary, as long as the exhaust temperature is below the predetermined temperature, the forced regeneration control is not performed, even if the particulate collection amount reaches the predetermined amount.

Specifically, in this embodiment, post-injection is carried out as forced regeneration control, in which additional fuel is injected in the expansion stroke or the exhaust stroke after normal fuel injection (main injection). The post-injection is first carried out in the expansion stroke to cause the additional fuel serving as unburned fuel (HC, CO, etc.) to react with oxygen contained in the exhaust gas, thereby activating the oxidation catalyst 9 through the temperature rise of the exhaust gas.

Thereafter, timing of the post-injection is switched to the exhaust stroke side, so that the unburned fuel (HC, CO, etc.) is supplied to and oxidized on the oxidation catalyst 9. Through this oxidative reaction, the heat of reaction (oxidation heat) is produced to raise the temperature of the DPF 12 to a predetermined temperature at which the DPF 21 is self-regenerated, whereby the DPF 12 is activated and the particulates are incinerated on the DPF 12.

Secondarily, NO contained in the exhaust gas is changed into $NO_2$ on the oxidation catalyst 9 by the oxidative reaction that takes place with the oxidation catalyst 9 being activated. As a result, an oxidizing agent ($NO_2$) for incineration of the particulates is produced, and the particulates are incinerated by using the same. Therefore, even if the DPF temperature is below about 550°C, the regeneration of the DPF 21 becomes possible. In this case, although forced regeneration speed of the DPF is generally lower than self-regeneration speed, it is possible to implement the oxidization (incineration) of the particulates (soot) at the DPF temperature of about 400°C.

Starting conditions for the forced regeneration control include, by way of example, the particulate collection amount being more than an allowable amount, warm-up of the engine being completed, and an engine load and rotation speed being equal to or more than respective predetermined values. In other words, since the particulates are incinerated through the oxidative reaction of the oxidation catalyst 9, the forced regeneration control is not performed when the oxidation catalyst 9 is not activated due to a low exhaust temperature as seen in a cold state of the engine or in a low load, low speed operation.

The ECU 21 estimates the amount of the particulates collected by the DPF 12 on the basis of relations of a front-rear differential pressure $\Delta P$ of the DPF 12, which is obtained from detection values P1, P2 of the upstream and the downstream pressure sensor 11a, 11b, and an exhaust gas flow rate V obtained from the fuel injection quantity and an intake air quantity A detected by the airflow sensor 4. When the collection amount exceeds the allowable amount and the operation state of the engine 1 fulfills the above-mentioned predetermined conditions such as the completion of warm-up of the engine, etc., the ECU 21 begins the forced regeneration control.

The forced regeneration control is not necessarily started, even if the particulate collection amount exceeds the allowable amount. Hence, there occurs variation in the particulate collection amount at the start of the forced regeneration control, which influences the particulate combustion state in the forced regeneration. Accordingly, the exhaust purification device of this embodiment controls the particulate combustion state in light of not only the DPF temperature and the amount of the oxygen contained in the exhaust gas but also the particulate collection amount, as will be explained in detail.

The ECU 21 implements a particulate combustion control routine shown in Fig. 2 at predetermined control intervals. At first, a determination is made at step S2 as to whether starting conditions are fulfilled. The starting conditions are set identical to those of the forced regeneration control, and the combustion control routine is performed in parallel with the forced regeneration control.

At subsequent step S4, a DPF outlet temperature $T_{2e}$ is estimated according to the below-mentioned procedure (temperature-estimating device) based on a detection value $T_2$ of the downstream temperature sensor 10b. In Fig. 3 explaining a relation between the sensor detection value $T_2$ and the DPF outlet temperature $T_{2e}$ in a temperature rise, the detection value $T_2$ shown by a solid line increases behind the actual DPF outlet temperature $T_{2e}$ indicated by a broken line, due to the response delay of the downstream temperature sensor 10b. In order to eliminate an error caused by the response delay of the sensor, processing of step S4 is performed.

At step S4, first, the detection value $T_2$ of the downstream temperature sensor 10b is sampled at predetermined time intervals, and a temperature variation $\Delta T_2$ is calculated according to the following expression (1):

$$\Delta T_2 = T_2(n) - T_2(n-m) \qquad (1),$$

where $T_2(n)$ represents a present sampled value, and $T_2(n-m)$ an m-period old sampled value. Then, according to a map shown in Fig. 4, a response coefficient K is determined according to the current exhaust gas flow rate V (calculated based on the fuel injection quantity and the intake air quantity A as described above). This map characteristic is obtained in advance through experiments and set so that the response coefficient K decreases with the increasing exhaust gas flow rate V.

On the basis of the obtained detection value $T_2$, temperature variation $\Delta T_2$, and response coefficient K, the DPF outlet temperature $T_{2e}$ is calculated according to the following expression (2).

$$T_{2e} = T_2(n) + \Delta T_2 \times K \qquad (2)$$

The expression (2) reflects the fact that, the larger the exhaust gas flow rate V is, the smaller the delay of the detection value $T_2$ of the downstream temperature sensor 10b with respect to the actual DPF outlet temperature $T_{2e}$ is.

Next, the ECU 21 proceeds to step S6 to estimate the particulate collection amount (collection amount-estimating function of the oxygen supply amount-adjusting device). In the process of this estimation, as in the estimation of the particulate collection amount that is one of the starting conditions of the forced regeneration control, the amount of the particulates collected by the DPF 12 is estimated on the basis of a relation between the front-rear differential pressure $\Delta P$ of the DPF and the exhaust gas flow rate V. At subsequent step S8, a determination is made whether the particulate collection amount is appropriate or excessive by comparing the particulate collection amount estimated at step S6 with a criterion value. This is because the optimum oxygen amount to be supplied to the DPF 12 varies depending on the particulate collection amount.

In the present embodiment, an appropriate combustion zone, in which the particulates can be properly burnt on the DPF, for a case where the particulate collection amount is appropriate, is set beforehand by experiment as a function of the DPF temperature, as shown in Fig. 5. Also, the appropriate combustion zone for a case where the particulate collection amount is excessive is set beforehand by experiment as shown in Fig. 6. In Figs. 5 and 6, a heavy line in the appropriate combustion zone represents the optimum oxygen amount; an upper-side hatched zone is a melt zone in which there is fear that the DPF is melted down; and a lower-side hatched zone indicates a defective regeneration zone in which the particulates cannot satisfactorily be burnt on the DPF. Naturally, in the map shown in Fig. 6 and used when the particulate collection amount is excessive, an optimum oxygen amount optOX is set at a smaller value at the same DPF temperature to suppress rapid particulate combustion, as compared to that in the map shown in Fig. 5 and used when the amount is appropriate.

In the particulate combustion control routine, if it is determined at step S8 that the particulate collection amount is appropriate, the routine proceeds to step S10 in which, on the premise that the DPF outlet temperature $T_{2e}$ indicates the current DPF temperature, the optimum oxygen amount optOX is determined according to the map shown in Fig. 5 and used when the amount is appropriate (optimum oxygen amount-calculating function of the oxygen supply amount-adjusting device). Whereupon the routine proceeds to step S14. If the particulate collection amount is excessive, the routine proceeds to step S12 in which the optimum oxygen amount optOX is determined according to the map shown in Fig. 6 and used when the amount is excessive, whereupon the routine proceeds to step S14. Instead of selecting either map for the determination, interpolation processing based on the two maps may be made to determine the optimum oxygen amount optOX that fully corresponds to the particulate collection amount.

At step S14, upper and lower limit oxygen amounts HiOX and LoOX are determined, which can be attained without causing harmful effects in the current operation state of the engine 1 (upper and lower limit oxygen amount-calculating function of the oxygen supply amount-adjusting device). Harmful effects such as for example a misfire and deterioration of drivability are noticeable in the operation state where oxygen is oversupplied, whereas smoke generation is noticeable in the operation state where oxygen is deficient. Step S14 sets the upper and lower limit oxygen amounts HiOX, LoOX capable of suppressing such harmful effects on the basis of the engine load (for example, the fuel injection quantity) and the engine rotation speed Ne from the map, not shown.

At subsequent step S16, a determination is made as to whether or not the optimum oxygen amount optOX is larger than the upper limit oxygen amount HiOX. If the result is YES (affirmative), the upper limit oxygen amount HiOX is set as a target oxygen amount tgtOX at step S18. Then, at step S20, the openings of the intake throttle valve 7 and the EGR valve 16 are controlled to feedback control the actual amount of oxygen remaining in the exhaust gas to the target oxygen amount tgtOX. Specifically, since not only the oxygen amount supplied into the cylinder but also the oxygen amount remaining in the exhaust gas varies according to a ratio of fresh air quantity to EGR quantity, the oxygen amount is adjusted by adjusting the openings of the intake throttle valve 7 and the EGR valve 16. Assuming that the fuel injected into the cylinder is all burnt, the amount of the oxygen remaining in the exhaust gas can be found by deducting the amount of the oxygen, required for the burning and corresponding to the fuel injection quantity, from the oxygen amount supplied into the cylinder. The oxygen amount supplied into the cylinder can be calculated on the basis of the fresh air quantity and the EGR quantity.

If the determination of step S16 is NO (negative), that is, if the optimum oxygen amount optOX is smaller than or equal to the upper limit oxygen amount HiOX, the routine proceeds to step S22 which determines whether or not the optimum oxygen amount optOX is smaller than the lower limit oxygen amount LoOX. If the determination is YES, the routine proceeds to step S24 in which the lower limit oxygen amount LoOX is set as the target oxygen amount tgtOX. Then, the feedback control of the oxygen amount is performed at step S20.

On the contrary, if the determination of step S22 is NO, that is, if the optimum oxygen amount optOX is between the upper and lower limit oxygen amounts HiOX and LoOX, the routine proceeds to step S26 in which the optimum oxygen amount optOX is set as the target oxygen amount tgtOX, whereupon the routine proceeds to step S20.

As described above, in the exhaust purification device according to the present embodiment, not only the amount of the oxygen contained in the exhaust gas and the DPF temperature but also the particulate collection amount is taken into consideration as a factor affecting the particulate combustion state. The oxygen amount supplied to the DPF 12 is adjusted on the basis of the map selected according to the collection amount, to thereby control the particulate combustion state in the forced regeneration control. This makes it possible to burn the particulates in the appropriate combustion state (on the heavy lines in the maps shown in Figs. 5 and 6) and securely regenerate the DPF 12 without being melted down, regardless of the collection amount.

In the forced regeneration control, moreover, the optimum oxygen amount optOX (namely, the target oxygen amount tgtOX) is set on the basis of the DPF temperature according to the map selected based on the particulate collection amount, and the amount of the oxygen contained in the exhaust gas is feedback-controlled. The amount of the oxygen contained in the exhaust gas is rapidly adjusted by means of control of the openings of the intake throttle valve 7 and the EGR valve 16. Thus, the oxygen amount control can be achieved with far better response compared to a case where the DPF temperature likely affected by the heat capacity of the DPF is controlled, as in the prior art described for example in Examined Japanese Utility Model Publication No. 5-3694. In addition, instead of directly using the detection value $T_2$ of the downstream temperature sensor 10b, the DPF outlet temperature $T_{2e}$ determined in light of a sensor time constant is applied as the DPF temperature used for the setting of the optimum oxygen amount optOX. This makes it possible to eliminate an error in detection temperature which would otherwise be caused by response delay of the sensor.

As a result of the control based on the oxygen amount and the elimination of the error in the detection temperature caused by the response delay of the sensor, it becomes possible to accurately realize the optimum oxygen amount optOX determined from the map shown in Fig. 5 or 6, and surely realize the desired particulate combustion state based on the map determination, even in the transient state such as rapid acceleration/deceleration where the effects of control delay are noticeable.

Furthermore, in case that the optimum oxygen amount optOX obtained from the map is beyond the range between the upper and lower limit oxygen amounts HiOX and LoOX that are set on the basis of the operation state of the engine 1, the optimum oxygen amount optOX is not set as the target oxygen amount tgtOX but limited to the upper or lower limit oxygen amount HiOX or LoOX. Therefore, various harmful effects attributable to the oversupply and deficiency of the oxygen amount can be prevented, with the most appropriate possible particulate combustion state maintained, whereby smooth engine operation can be realized even in the forced regeneration control.

An exhaust purification device according to a second embodiment of the present invention will be described below.

The exhaust purification device of the second embodiment is similar to the first embodiment in that the oxygen supply amount is adjusted to the optimum oxygen amount that is set in accordance with the DPF temperature, referring to that one of the maps respectively used when the amount is appropriate or excessive which is selected according to the particulate collection amount. With the intention of smoothing the engine operation during the filter regeneration, the device of the second embodiment is characterized in that, in the adjustment of the oxygen supply amount, the engine combustion state is controlled in accordance with a result of comparison between the optimum oxygen amount and each of the residual oxygen amounts in the exhaust gas respectively observed when the combustion in the engine 1 is carried out at the lower and the upper limit air/fuel ratio.

As is obvious from the above outline explanation, the exhaust purification device of the second embodiment may be constructed in substantially similar manner to the device according to the first embodiment, apart mainly from the content of the particulate combustion control routine. Therefore, explanations about common points with the first embodiment will be omitted.

The exhaust purification device may be constructed as shown in Fig. 1. The ECU 21 constitutes the oxygen supply amount-adjusting device in cooperation with the intake throttle valve 7 and the EGR valve 16. Stored in the ECU 21 are a DPF temperature-oxygen supply amount map used when the amount of particulates collected by the DPF is appropriate and a map used when the collection amount is excessive (see Figs. 7 and 8). These maps correspond to those shown in Figs. 5 and 6, respectively.

In the maps of Figs. 7 and 8 respectively used when the amount is appropriate or excessive, a defective regeneration zone, an appropriate regeneration zone (corresponding to the one shown in Figs. 5 and 6), and a melt zone are shown, with the DPF temperature and the oxygen supply amount individually taken along ordinate and abscissa. The particulates can be satisfactorily burnt in the appropriate regeneration zone, but cannot be satisfactorily burnt in the defective regeneration zone. In the melt zone, there is fear that the DPF is melt down.

In Figs. 7 and 8, symbols CC1 and CC2 represent first and second lower regeneration limit oxygen amounts, respectively. In other words, they represent a lower regeneration limit oxygen amount CC having a predetermined range. Symbols DD1 and DD2 designate first and second upper regeneration limit oxygen amounts, respectively, or represent an upper regeneration limit oxygen amount DD having a predetermined range. Symbols SS1 and SS2 denote first and second optimum oxygen amounts, respectively, or a optimum oxygen amount SS having a predetermined fluctuation range. By setting the lower and upper regeneration limit oxygen amounts CC, DD and the optimum oxygen amount SS to have the respective predetermined ranges as described above, fear that the DPF temperature varying according to the oxygen supply amount enters the defective regeneration zone or the melt zone is reduced. Such fear may occur due to a control error that is caused in variably controlling the engine combustion state (for example, air/fuel ratio), as described below, for adjustment of the oxygen supply amount.

The lower and upper regeneration limit oxygen amounts CC and DD vary depending on the DPF temperature, and form lower and upper regeneration limit oxygen amount lines in Figs. 7 and 8, respectively. The lower and upper regeneration limit oxygen amount lines cooperate with a regenerable temperature line, indicative of a regenerable temperature of for example about 250°C, to define the appropriate regeneration zone. An optimum oxygen amount line formed by the varying optimum oxygen amount SS is within the appropriate regeneration zone. As illustrated in the figures, the optimum oxygen amount is set at a value near an intermediate value between the lower and upper regeneration limit oxygen amounts CC and DD or at a value closer to the lower regeneration limit oxygen amount than to the intermediate value, whereby fear of harmful effects being caused due to the deficiency or oversupply of oxygen is reduced, and the DPF temperature from reaching the melt zone is surely prevented.

As mentioned above, in the second embodiment, the combustion state of the engine 1 is controlled on the basis of the first and the second residual oxygen amount in the exhaust gas discharged from the engine 1 operating at the lower and the upper limit air/fuel ratio. In respect of such combustion control, the ECU 21 serving as an oxygen supply amount-adjusting device comprises a lower limit air/fuel ratio-calculating section 21a, an upper limit air/fuel ratio-calculating section 21b, and a residual oxygen amount-computing section 21c, as shown in Fig. 9.

In the lower limit air/fuel ratio-calculating section 21a, a lower limit air/fuel ratio A/Fmin is calculated on the basis of the engine rotation speed Ne and the fuel injection quantity Q with reference to an Ne-Q-A/Fmin map that is experimentally obtained in advance. In this map, the lower limit air/fuel ratio is set at a value such that an allowable particulate discharge amount, allowable drivability, etc. can be attained when the engine 1 is operated at an air/fuel ratio higher than or equal to the lower limit air/fuel ratio. In the upper limit air/fuel ratio-calculating section 21b, an upper limit air/fuel ratio A/Fmax is calculated on the basis of the engine rotation speed Ne and the fuel injection quantity Q with reference to an Ne-Q-A/Fmax map. The upper limit air/fuel ratio is set at a value such that an NOx discharge amount and engine operation noise are prevented from exceeding respective allowable limits when the engine 1 is operated at an air/fuel ratio lower than or equal to the upper limit air/fuel ratio. These two maps are schematically shown in Fig. 9, with the detail thereof omitted.

In the residual oxygen amount-computing section 21c, in case of a 4-cylinder engine, an intake air quantity Ai (g/st) is determined by dividing an airflow sensor value (g/sec) with a value obtained by doubling the quotient of the engine rotation speed Ne by 60, a consumed air quantity Ac (g/st) is determined by multiplying a fuel quantity Qaf (g/st) by the theoretical air/fuel ratio 14.5, and a residual air amount Ar (g/st) is determined by deducting the consumed air quantity Ac from the intake air quantity Ai, where symbol st represents a stroke. The residual oxygen amount in the exhaust gas (g/sec) per second is determined by multiplying the residual air quantity Ar per stroke by the quotient of engine rotation speed Ne by 60 and by the product of a value of 2 corresponding to the 4-cylinder engine and ratio (0.23) of oxygen contained in air. The above explanation can be expressed by the following equations.

$$\text{Intake air quantity Ai (g/st)} = \text{airflow sensor value (g/sec)} \div \{(Ne / 60) \times 2\}$$

$$\text{Consumed air quantity Ac (g/st)} = Qaf \times 14.5$$

$$\text{Residual air quantity Ar (g/st)} = Ai - Ac$$

$$\text{Residual oxygen amount (g/sec)} = Ar \times (Ne/60) \times 2 \times 0.23$$

As compared to the above, the residual oxygen amount in the combustion performed at the lower or upper limit air/fuel ratio A/Fmin or A/Fmax, calculated by the lower or upper limit air/fuel ratio-calculating section 21a or 21b, is calculated differently only in that the intake air quantity Ai is determined by multiplying the lower or upper limit air/fuel ratio A/Fmin or A/Fmax by the fuel quantity Qaf. The just-mentioned explanation can be expressed by the following equations.

$$\text{Intake air quantity Ai (g/st)} = \text{A/Fmin (or A/Fmax)} \times \text{Qaf}$$

$$\text{Consumed air quantity Ac (g/st)} = \text{Qaf} \times 14.5$$

$$\text{Residual air quantity Ar (g/st)} = \text{Ai} - \text{Ac}$$

$$\text{Residual oxygen amount (g/sec)} = \text{Ar x (Ne / 60)} \times 2 \times 0.23$$

Fig. 10 exemplarily shows a relation of the residual oxygen amounts in the combustion performed at the lower and upper limit air/fuel ratios to the optimum oxygen amount SS and the lower and upper regeneration limit oxygen amounts CC and DD. In Fig. 10, symbol AA and white circles represent the residual oxygen amount (first residual oxygen amount) in the combustion performed at the lower limit air/fuel ratio, whereas symbol BB and black circles indicate the residual oxygen amount (second residual oxygen amount) in the combustion performed at the upper limit air/fuel ratio.

Hereinafter, the particulate combustion control routine according to a second embodiment will be explained with reference to Figs. 11 and 12.

At step S31 (corresponding to step S6 shown in Fig. 2) of this routine, the particulate collection amount is estimated on the basis of the relation between the front-rear differential pressure $\Delta P$ of the DPF and the exhaust gas flow rate V. Subsequent step S32 (corresponding to step S2 shown in Fig. 2) determines whether or not the starting conditions of the combustion control which are identical to those of the forced regeneration control are fulfilled, thus determining whether the time for the regeneration to be made is reached.

If it is determined at step S32 that the time for the regeneration is reached, the DPF outlet temperature is estimated (step S33). At step S33, the DPF outlet temperature $T_{2e}$ is calculated according to the expression (2) as in step S4 of Fig. 2.

The next step S34 determines whether the DPF outlet temperature $T_{2e}$ is higher than or equal to the regenerable temperature (for example, about 250°C). If the result of the determination is affirmative, a further determination is made whether the particulate collection amount is appropriate or excessive (step S35).

If the particulate collection amount is appropriate, the optimum oxygen amount SS and the lower and upper regeneration limit oxygen amounts CC and DD individually corresponding to the DPF temperature indicated by the DPF outlet temperature $T_{2e}$ are determined with reference to the map shown in Fig. 7 and used when the amount is appropriate (step S36). If the collection amount is excessive, the optimum oxygen amount SS and the lower and upper regeneration limit oxygen amounts CC and DD individually corresponding to the DPF temperature are determined with reference to the map shown in Fig. 8, which is used when the amount is excessive (step S37).

At the next step S38, the lower limit of the air/fuel ratio (lower limit air/fuel ratio) that enables admissible engine operation is calculated by the lower limit air/fuel ratio-calculating section 21a, and subsequently the residual oxygen amount in the engine operation performed at the lower limit air/fuel ratio, that is, the first residual oxygen amount AA, is determined by the residual oxygen amount-computing section 21c. Furthermore, the upper limit of the air/fuel ratio (upper limit air/fuel ratio) that enables the admissible engine operation is calculated by the upper limit air/fuel ratio-calculating section 21b, and then the residual oxygen amount in the exhaust gas in the engine operation performed at the upper limit air/fuel ratio, that is, the second residual oxygen amount BB, is determined by the residual oxygen amount-computing section 21c.

Step S39 determines whether the optimum oxygen amount SS is smaller than or equal to the second residual oxygen amount BB. If the result of the determination is affirmative ($SS \leq BB$), it is determined whether the optimum oxygen amount SS is larger than or equal to the first residual oxygen amount AA (step S40).

If the result of the determination at step S40 is affirmative, that is, if a relation that satisfies an expression "AA ≤ SS ≤ BB" is formed as exemplarily shown by symbol ① in Fig. 10, the combustion control is carried out to obtain the optimum oxygen amount SS (step S41). In the combustion control, in order to obtain the optimum oxygen amount SS for example by causing the air/fuel ratio to vary between allowable lower and upper limit air/fuel ratios, the air/fuel ratio corresponding to the optimum oxygen amount SS is set as a preset air/fuel ratio. Then, to obtain the preset air/fuel ratio, the opening of the intake throttle valve 7, that of the EGR valve 16, and the fuel injection quantity from the fuel injection nozzle 2 are controlled. As a result, the combustion is performed at the preset air/fuel ratio, and the optimum oxygen amount SS is supplied to the DPF 12. In other words, the combustion control adjusts the oxygen supply amount to the optimum oxygen amount SS.

On the other hand, if the result of the determination at step S40 is negative, or SS < AA < BB, it is further determined whether the first residual oxygen amount (residual oxygen amount in the exhaust gas in the combustion performed at the lower limit air/fuel ratio) AA is smaller than or equal to the upper regeneration limit oxygen amount DD (step S42). If the result of the determination at step S42 is affirmative, that is, if a relation that satisfies an expression "SS < AA ≤ DD" is formed as exemplarily shown by symbol ② in Fig. 10, the combustion control for obtaining the first residual oxygen amount AA is performed (step S43). For example, the preset air/fuel ratio is set at the lower limit air/fuel ratio to perform the combustion at the lower limit air/fuel ratio, so that the oxygen amount supplied to the DPF 12 is adjusted to the first residual oxygen amount AA.

If the result of the determination at step S42 is negative, that is, if a relation that satisfies an expression "AA > DD and AA > SS" is formed as exemplarily shown by symbol ③ in Fig. 10, the combustion control for obtaining the upper regeneration limit oxygen amount DD is carried out (step S44). For example, the combustion is performed after setting the preset air/fuel ratio that is smaller than the lower limit air/fuel ratio, so that the oxygen supply amount is adjusted to the upper regeneration limit oxygen amount DD.

If the result of the determination at step S39 is negative (BB < SS), it is determined whether the lower regeneration limit oxygen amount CC is smaller than or equal to the second residual oxygen amount (residual oxygen amount in the combustion performed at the upper limit air/fuel ratio) BB (step S45). If the result of the determination is affirmative, that is, if a relation that satisfies an expression "CC ≤ BB < SS" is formed as exemplarily shown by symbol ④ in Fig. 10, the combustion control for obtaining the second residual oxygen amount BB is performed (step S46). For example, the combustion is performed after setting the upper limit air/fuel ratio as the preset air/fuel ratio, so as to adjust the oxygen supply amount to the second residual oxygen amount BB. On the other hand, if the result of the determination at step S45 is negative, that is, if a relation that satisfies an expression "BB < CC and BB < SS" is formed as exemplarily shown by symbol ⑤ in Fig. 10, the combustion control for obtaining the lower regeneration limit oxygen amount CC is performed (step S47). For example, the combustion is performed after setting the preset air/fuel ratio larger than the upper limit air/fuel ratio, so as to adjust the oxygen supply amount to the lower regeneration limit oxygen amount CC.

The following is a summary of adjustment of the oxygen supply amount in the second embodiment. If the optimum oxygen amount SS is between the first and second residual oxygen amounts AA and BB, the oxygen supply amount is adjusted to the optimum oxygen amount SS. If the optimum oxygen amount SS is not between the residual oxygen amounts AA and BB, and if at least one of the first and second residual oxygen amounts AA and BB is between the lower and upper regeneration limit oxygen amounts CC and DD, the oxygen supply amount is adjusted to the first or second residual oxygen amount AA or BB, whichever is closer to the optimum oxygen amount SS. If the optimum oxygen amount SS is not between the first and second residual oxygen amounts AA and BB, and if the first and second residual oxygen amounts AA and BB are not between the lower and upper regeneration limit oxygen amounts CC and DD, the oxygen supply amount is adjusted to the lower or upper regeneration limit oxygen amount CC or DD, whichever is closer to the first or second residual oxygen amount AA or BB.

In this manner, the optimum oxygen amount SS is supplied to the DPF 12 while the engine 1 is smoothly operated at the air/fuel ratio within the range of the lower or the upper limit air/fuel ratio, thereby to perform the most optimum possible DPF regeneration. If it is difficult to implement the optimum DPF regeneration by supplying the optimum oxygen amount SS, the first or second residual oxygen amount AA or BB, whichever is closer to the optimum oxygen amount SS, is supplied to the DPF 12 by operating the engine at the lower or the upper limit air/fuel ratio to perform preferable DPF regeneration under the smooth engine operation. Otherwise, the oxygen supply amount is adjusted to the lower or upper regeneration limit oxygen amount CC or DD to implement the DPF regeneration.

In short, the exhaust purification device according to the second embodiment makes compatible the optimization of the oxygen amount supplied to the DPF 12 and the smooth engine operation. Furthermore, the exhaust purification device of the second embodiment has advantages similar to those of the device according to the first embodiment. For example, it is possible to surely prevent the harmful effects attributable to the deficiency and oversupply of oxygen, especially the meltdown of the DPF, by optimizing the oxygen supply amount regardless of the particulate collection amount.

Next, an exhaust purification device according to a third embodiment of the present invention will be described.

The exhaust purification device of the third embodiment is similar to the first and second embodiments in that the oxygen supply amount is adjusted to a value between the lower and upper regeneration limit oxygen amounts that are determined according to the DPF temperature on the basis of that one of the maps individually used when the amount is appropriate or excessive which is selected based on the particulate collection amount. The device of the third embodiment is characterized in that, in adjusting the oxygen supply amount, the combustion state is controlled according to a result of comparison between the residual oxygen amount in the exhaust gas, which is observed when the engine 1 is in the optimum combustion state, and each of the lower and upper regeneration limit oxygen amounts.

As is understood from the above summary descriptions, the exhaust purification device according to the third embodiment may be constructed substantially similarly to the devices of the first and second embodiments, apart mainly from the content of the particulate combustion control routine. An explanation about common points with the first and second embodiments will be omitted.

The exhaust purification device may be constructed as shown in Fig. 1. Stored in the ECU 21, which constructs the oxygen supply amount-adjusting device in cooperation with the intake throttle valve 7 and the EGR valve 16, are the DPF temperature-oxygen supply amount map used when the amount of the particulates collected by the DPF 12 is appropriate and the map used when the collection amount is excessive. As shown in Figs. 13 and 14, both the maps are identical to those in Figs. 7 and 8, except that the optimum supply amount SS is not set. Therefore, the explanation of the maps will be omitted.

As described above, according to the third embodiment, the combustion state is controlled on the basis of the residual oxygen amount in the exhaust gas in the optimum combustion. In this respect, the ECU 21 serving as an oxygen supply amount-adjusting device comprises an air/fuel ratio-calculating section 21e and a residual oxygen amount-computing section 21c as shown in Fig. 15. The air/fuel ratio-calculating section 21e calculates an optimum air/fuel ratio A/Fopt on the basis of the engine rotation speed Ne and the fuel injection quantity Q with reference to an Ne-Q-A/Fopt map that is experimentally obtained in advance. The optimum air/fuel ratio A/Fopt is set at a value that enables the optimum combustion in the engine 1. The combustion state of the engine 1 is optimized when the ECU 21 controls a fuel injection amount and the timing of the injection so that an actual air/fuel ratio A/F equals the optimum air/fuel ratio A/Fopt and also controls, where required, the intake air quantity and an EGR reduction amount. The residual oxygen amount-computing section 21c shown in Fig. 15, similarly to the one shown in Fig. 9, determines a residual oxygen amount AAA in the exhaust gas per second in the optimum combustion, which corresponds to the optimum air/fuel ratio A/Fopt.

Instead of determining the residual oxygen amount reflecting the combustion state of the engine 1 based on the optimum air/fuel ratio A/Fopt, such residual oxygen amount may be determined from the airflow sensor value, the engine rotation speed Ne and the fuel quantity Qaf, as in the second embodiment.

Next, the particulate combustion control routine according to the third embodiment will be described with reference to Figs. 16 and 17.

The routine includes steps S51 through S55 corresponding to steps S31 through S35 shown in Fig. 11, respectively. Step S51 estimates the particulate collection amount, whereas step S52 determines whether or not the time for the regeneration to be made is reached, and step S53 calculates the DPF outlet temperature $T_{2e}$. Step S54 determines whether the DPF outlet temperature $T_{2e}$ is higher than or equal to a DPF regenerable temperature, and step S55 determines whether the particulate collection amount is appropriate or excessive.

If step S55 determines that the particulate collection amount is appropriate, the lower and upper regeneration limit oxygen amounts CC and DD corresponding to the DPF temperature (DPF outlet temperature $T_{2e}$) are determined with reference to the map shown in Fig. 13, which is used when the amount is appropriate (step S56). On the other hand, if the collection amount is excessive, the lower and upper regeneration limit oxygen amounts CC and DD corresponding to the DPF temperature are determined with reference to the map shown in Fig. 14, which is used when the amount is excessive (step S57).

At the next step S58, the residual oxygen amount AAA in the exhaust gas, which reflects the combustion state of the engine 1, is determined by the residual oxygen amount-computing section 21c on the basis of the air/fuel ratio A/Fopt in the optimum combustion, or on the basis of the airflow sensor value, the engine rotation speed Ne and the fuel quantity Qaf.

Step S59 determines whether the residual oxygen amount AAA is smaller than or equal to the upper regeneration limit oxygen amount DD. If the result of the determination is affirmative (AAA ≤ DD), it is determined whether the residual oxygen amount AAA is larger than or equal to the lower regeneration limit oxygen amount CC (step S60).

If the result of the determination at step S60 is affirmative, that is, if a relation that satisfies an expression "CC ≤ AAA ≤ DD" is formed, it is possible to supply to the DPF 12 the oxygen amount falling within the range from the lower regeneration limit oxygen amount CC to the upper regeneration limit oxygen amount DD so that the filter regeneration can be appropriately realized, even if the optimum combustion is performed. Therefore, the optimum combustion is continued (step S61).

On the other hand, if the result of the determination at step S60 is negative, that is, if the residual oxygen amount AAA is below the lower regeneration limit oxygen amount CC, and a relation that satisfies an expression "AAA < CC < DD" is formed, the combustion state of the engine 1 is controlled so that the oxygen amount supplied to the DPF 12 equals the lower regeneration limit oxygen amount CC (step S62). In other words, there is fear that the optimum combustion causes the deficiency of the oxygen amount to be supplied to the DPF 12, making it impossible to satisfactorily implement the filter regeneration. Thus, in order to adjust the oxygen supply amount to the lower regeneration limit oxygen amount CC, the air/fuel ratio is set that is, for example, larger than the optimum air/fuel ratio A/Fopt corresponding to the optimum combustion, and the engine 1 is operated at the thus set air/fuel ratio.

If the result of the determination at step S59 is negative, that is, if the residual oxygen amount AAA in the optimum combustion is larger than the upper regeneration limit oxygen amount DD, and a relation that satisfies an expression "CC < DD < AAA" is formed, the combustion state is controlled so that the upper regeneration limit oxygen amount DD is supplied (step S63). In other words, there is fear that the optimum combustion makes the oxygen supply amount excessive, which causes troubles such as the meltdown of the filter. Accordingly, in order to adjust the oxygen supply amount to the upper regeneration limit oxygen amount DD, the engine is operated for example at the air/fuel ratio smaller than the optimum air/fuel ratio A/Fopt.

The above-mentioned combustion control (adjustment of the oxygen supply amount) according to the third embodiment will be briefly summarized below. If the residual oxygen amount AAA in the exhaust gas in the optimum combustion of the engine 1 is within the range from the lower regeneration limit oxygen amount CC to the upper regeneration limit oxygen amount DD, the appropriate DPF regeneration is performed while the optimum combustion is carried out to optimize the operation performance of the engine and the exhaust characteristic. If the residual oxygen amount AAA is smaller than the lower regeneration limit oxygen amount CC, the combustion control is performed so that the oxygen supply amount equals the lower regeneration limit oxygen amount CC. If the residual oxygen amount AAA is larger than the upper regeneration limit oxygen amount DD, the combustion control is performed to cause the oxygen supply amount to equal the upper regeneration limit oxygen amount DD. Thus, the DPF 12 can be appropriately regenerated.

In this way, the filter regeneration is carried out while the most optimum possible combustion is performed to improve the engine performance, whereas the DPF regeneration is implemented with the oxygen supply amount adjusted to the lower or upper regeneration limit oxygen amount CC or DD in case that the oxygen amount supplied to the DPF 12 becomes deficient or oversupplied if the optimum combustion is performed.

Consequently, with the exhaust purification device according to the third embodiment, it is possible to make compatible the optimization of the oxygen amount supplied to the DPF 12 and that of the combustion state. Furthermore, the exhaust purification device of the third embodiment has the same advantages as the first and second embodiments.

Fig. 18 shows the adjustment of the oxygen supply amount according a modification of the third embodiment.

In this modification, similarly to the third embodiment, if the residual oxygen amount AAA in the optimum combustion is smaller than the lower regeneration limit oxygen amount CC, the oxygen amount supplied to the DPF 12 is adjusted to the lower regeneration limit oxygen amount CC. If the residual oxygen amount is larger than the upper regeneration limit oxygen amount DD, the oxygen supply amount is adjusted to the upper regeneration limit oxygen amount DD. This modification is characterized by the following features.

In the modification shown in Fig. 18, when the residual oxygen amount AAA (indicated by a mark x in Fig. 18) in the optimum combustion is smaller than a first lower regeneration limit oxygen amount CC1, the oxygen amount supplied to the DPF 12 is adjusted to the first lower regeneration limit oxygen amount CC1 (the adjusted oxygen supply amount is shown by a black circle in Fig. 18). If the residual oxygen amount AAA is between the first and second lower regeneration limit oxygen amounts CC1 and CC2, or if within the predetermined range of the lower regeneration limit oxygen amount CC, the oxygen amount is adjusted to the second lower regeneration limit oxygen amount. If the residual oxygen amount AAA is between first and second upper regeneration limit oxygen amounts DD1 and DD2, or if within the predetermined range of the upper regeneration limit oxygen amount DD, the oxygen amount supplied to the DPF 12 is adjusted to the first upper regeneration limit oxygen amount DD1. If the residual oxygen amount AAA is larger than the second upper regeneration limit oxygen amount DD2, the oxygen supply amount is adjusted to the second upper regeneration limit oxygen amount DD2.

As described above, in the modification shown in Fig. 18, the adjustment of the oxygen amount supplied to the DPF 12 is minimized to suppress changes in the engine operation state that are caused when the oxygen supply amount is adjusted. In addition, the oxygen supply amount is adjusted to a safety side by adjusting the oxygen supply amount to the second lower regeneration limit oxygen amount CC2 or the first upper regeneration limit oxygen amount DD1 if required.

Fig. 19 shows the adjustment of the oxygen supply amount in case that the optimum oxygen amount SS is set in the appropriate regeneration zone in the modification shown in Fig. 18.

In Fig. 19, the optimum oxygen amount SS has a predetermined range between the first optimum oxygen amount SS1 and the second optimum oxygen amount SS2 larger than the first one. If the residual oxygen amount AAA (indicated by the mark x in Fig. 19) in the exhaust gas, which corresponds to the combustion state of the engine 1, is larger than the lower regeneration limit oxygen amount CC and smaller than the first optimum oxygen amount SS1, the oxygen amount supplied to the DPF 12 is adjusted to the first optimum oxygen amount SS1. On the other hand, if the residual oxygen amount AAA is smaller than the upper regeneration limit oxygen amount DD and larger than the second optimum oxygen amount SS2, the oxygen supply amount is adjusted to the second optimum oxygen amount SS2. In other words, when the residual oxygen amount AAA is between the lower and upper regeneration limit oxygen amounts CC and DD, and is outside the predetermined range of the optimum oxygen amount SS, the oxygen supply amount is adjusted to either the first or second optimum oxygen amount SS1 or SS2, whichever is closer thereto. As mentioned above, in the modification shown in Fig. 19, the adjustment of the oxygen supply amount is performed to a minimum to repress the changes of the engine operation state.

Although this is the end of descriptions of the first through third embodiments and modification of the present invention, this invention is not limited to the aforementioned embodiments and the modification.

For example, in the first through third embodiments, the exhaust purification device is embodied as the one for the common rail diesel engine 1, and the post-injection is carried out as forced regeneration control. However, the form of the engine, the detail of the forced regeneration control, and the like, are not limited thereto. For example, the exhaust purification device may be applied to an ordinary diesel engine. For the forced regeneration control, intake/exhaust throttling may be made with the injection timing retarded, instead of implementing the post-injection.

Although, in the first through third embodiments, the adjustment of the oxygen supply amount is performed simultaneously with the forced regeneration control, the invention is not limited thereto. For example, when the DPF is self-regenerated without the forced regeneration control being implemented, the oxygen supply amount supplied to the DPF may be adjusted as in the embodiments. Also in this case, the defective regeneration and meltdown of the DPF and the like are prevented, whereby the DPF can be satisfactorily regenerated.

Moreover, in the first through third embodiments, the after-treatment device 14 is constructed as a consecutive regenerating system DPF that is provided with the oxidation catalyst 9 on the upstream side of the DPF 12. Alternatively, for example, the oxidation catalyst 9 may be integrated with the DPF 12, or the DPF may be constructed as an ordinary DPF without the oxidation catalyst 9.

In the first through third embodiments, the DPF outlet temperature $T_{2e}$ determined in light of the sensor response delay is applied as a DPF temperature. Alternatively, for example, the detection value $T_2$ of the downstream temperature sensor 10b may be directly used as a DPF temperature. The DPF temperature may be obtained on the basis of the detection value of the upstream temperature sensor 10a.

In the first embodiment, the target oxygen amount tgtOX is limited to the upper or lower limit oxygen amount HiOX or LoOX. Alternatively, the optimum oxygen amount optOX determined from the map may be determined as the target oxygen amount tgtOX without condition.

## Claims

1. An exhaust purification device having a filter disposed in an exhaust passage of an internal combustion engine for collecting particulates contained in exhaust gas, and an oxygen supply amount-adjusting device capable of adjusting an oxygen amount supplied to the filter, comprising:

    a temperature-estimating device for detecting or estimating a temperature of or near the filter,

    wherein said oxygen supply amount-adjusting device adjusts the oxygen supply amount to a value between lower and upper regeneration limit oxygen amounts that are determined according to the filter temperature.

2. The exhaust purification device according to claim 1, wherein said oxygen supply amount-adjusting device determines the oxygen supply amount from a residual oxygen amount in the exhaust gas, which corresponds to combustion state of the internal combustion engine.

3. The exhaust purification device according to claim 1, wherein said oxygen supply amount-adjusting device determines an optimum oxygen amount between the lower and upper regeneration limit oxygen amounts according to the filter temperature and adjusts the oxygen supply amount to be equal to or close to the optimum oxygen amount.

4. The exhaust purification device according to claim 3, wherein the optimum oxygen amount is set at a value near an intermediate value between the lower and upper regeneration limit oxygen amounts or a value closer to the lower regeneration limit oxygen amount than to the intermediate value.

5. The exhaust purification device according to claim 3, wherein the optimum oxygen amount has a predetermined range between a first optimum oxygen amount and a second optimum oxygen amount larger than the first one, and

said oxygen supply amount-adjusting device determines the oxygen supply amount according to the residual oxygen amount in the exhaust gas, which corresponds to the combustion state of said internal combustion engine, and, if the oxygen supply amount is outside the predetermined range of the optimum oxygen amount, adjusts the oxygen supply amount to either the first or the second optimum oxygen amount, whichever is closer to the oxygen supply amount.

**6.** The exhaust purification device according to claim 3, wherein said oxygen supply amount-adjusting device determines a first and a second residual oxygen amount in the exhaust gas, which correspond to the combustion states in which the internal combustion engine is operated at a lower limit air/fuel ratio and at an upper limit air/fuel ratio, respectively, compares the optimum oxygen amount to each of the first and second residual oxygen amounts, and adjusts the oxygen supply amount according to a result of the comparison.

**7.** The exhaust purification device according to claim 6, wherein said oxygen supply amount-adjusting device adjusts the oxygen supply amount to the optimum oxygen amount when the optimum oxygen amount is between the first and second residual oxygen amounts.

**8.** The exhaust purification device according to claim 6, wherein said oxygen supply amount-adjusting device adjusts the oxygen supply amount to either the first or the second residual oxygen amounts, whichever is closer to the optimum oxygen amount, if the optimum oxygen amount is not between the first and second residual oxygen amounts.

**9.** The exhaust purification device according to claim 6, wherein said oxygen supply amount-adjusting device adjusts the oxygen supply amount to either the lower or the upper regeneration limit oxygen amount, whichever is closer to the first or the second residual oxygen amount, if the optimum oxygen amount is not between the first and second residual oxygen amounts and if the first and the second residual oxygen amount are not between the lower and upper regeneration limit oxygen amounts.

**10.** The exhaust purification device according to claim 1, wherein the lower regeneration limit oxygen amount has a predetermined range between a first lower regeneration limit oxygen amount and a second lower regeneration limit oxygen amount larger than the first one;

the upper regeneration limit oxygen amount has a predetermined range between a first upper regeneration limit oxygen amount and a second upper regeneration limit oxygen amount larger than the first one; and

said oxygen supply amount-adjusting device determines the oxygen supply amount from the residual oxygen amount in the exhaust gas which corresponds to the combustion state of the internal combustion engine, adjusts the oxygen supply amount to the first lower regeneration limit oxygen amount when the oxygen supply amount is smaller than the first lower regeneration limit oxygen amount, adjusts the oxygen supply amount to the second lower regeneration limit oxygen amount when the oxygen supply amount is within the predetermined range of the lower regeneration limit oxygen amount, adjusts the oxygen supply amount to the first upper regeneration limit oxygen amount when the oxygen supply amount is within the predetermined range of the upper regeneration limit oxygen amount, and adjusts the oxygen supply amount to the second upper regeneration limit oxygen amount when the oxygen supply amount is larger than the second upper regeneration limit oxygen amount.

**11.** The exhaust purification device according to claim 1, wherein said oxygen supply amount-adjusting device estimates an amount of the particulates collected by the filter and sets the lower and upper regeneration limit oxygen amounts according to the estimated particulate collection amount and the filter temperature.

**12.** The exhaust purification device according to claim 1, wherein said oxygen supply amount-adjusting device adjusts the oxygen supply amount when the estimated particulate collection amount is not smaller than a predetermined amount and when the internal combustion engine is in a predetermined operation state.

**13.** The exhaust purification device according to claim 1, wherein said temperature-estimating device estimates the temperature of or near the filter based on a detection output of a temperature-detecting device for detecting the temperature of or near the filter and a change of the detection output.

**14.** The exhaust purification device according to claim 1, wherein said filter can be regenerated through an oxidative reaction of an oxidation catalyst disposed in the filter or in the exhaust passage at a location upstream of the filter.

FIG. 1

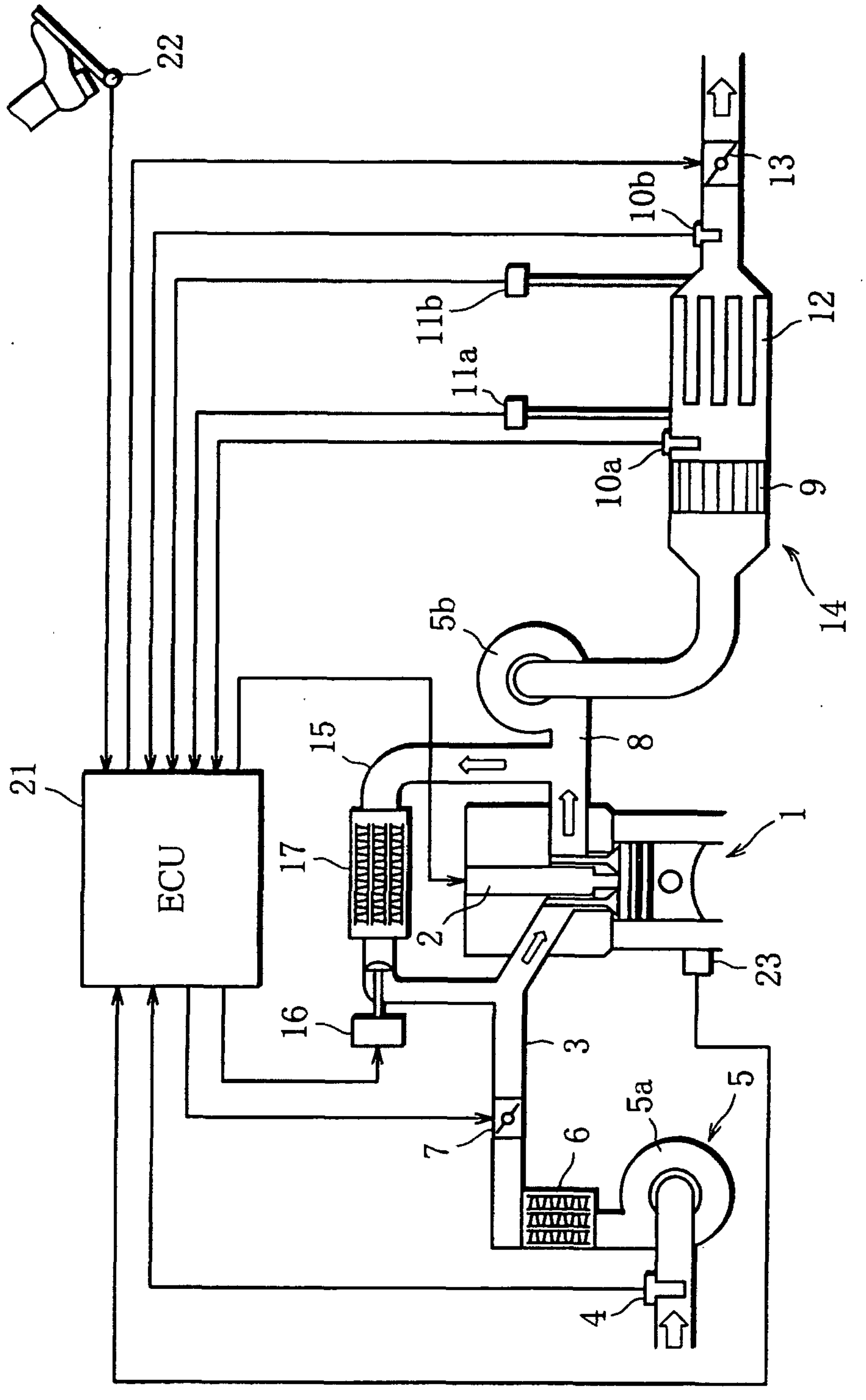

FIG. 2

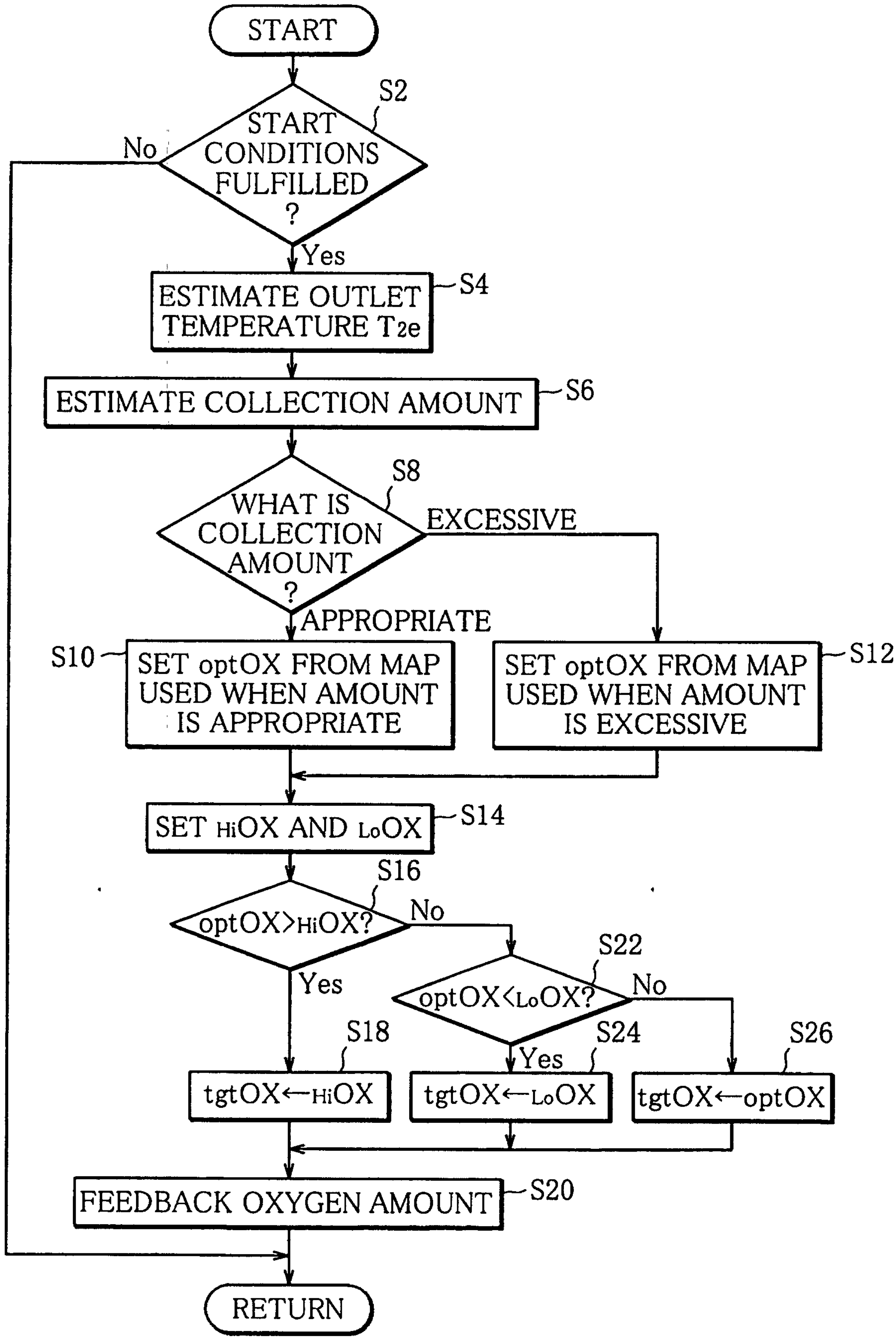
START
S2
START CONDITIONS FULFILLED ?
No
Yes
ESTIMATE OUTLET TEMPERATURE T2e
S4
ESTIMATE COLLECTION AMOUNT
S6
S8
WHAT IS COLLECTION AMOUNT ?
EXCESSIVE
APPROPRIATE
S10
SET optOX FROM MAP USED WHEN AMOUNT IS APPROPRIATE
SET optOX FROM MAP USED WHEN AMOUNT IS EXCESSIVE
S12
SET HiOX AND LoOX
S14
S16
optOX>HiOX?
No
Yes
S22
optOX<LoOX?
No
Yes
S18
S24
S26
tgtOX←HiOX
tgtOX←LoOX
tgtOX←optOX
FEEDBACK OXYGEN AMOUNT
S20
RETURN

FIG. 3

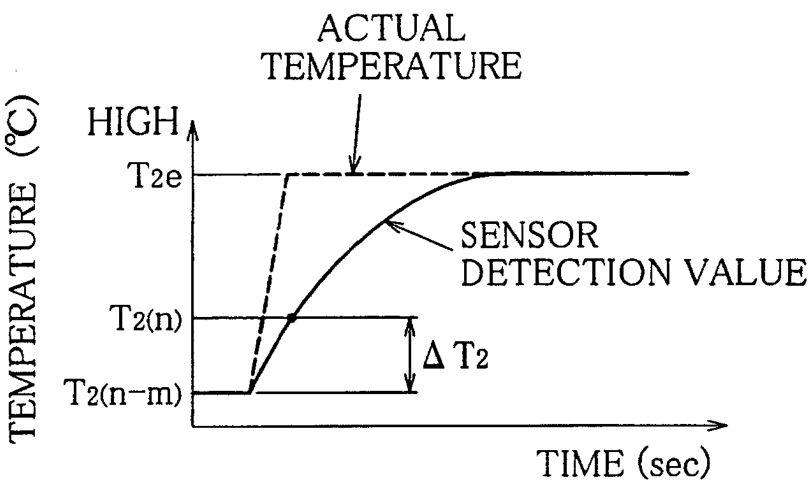
ACTUAL
TEMPERATURE
HIGH
TEMPERATURE (℃)
T2e
SENSOR
DETECTION VALUE
T2(n)
Δ T2
T2(n-m)
TIME (sec)

FIG. 4

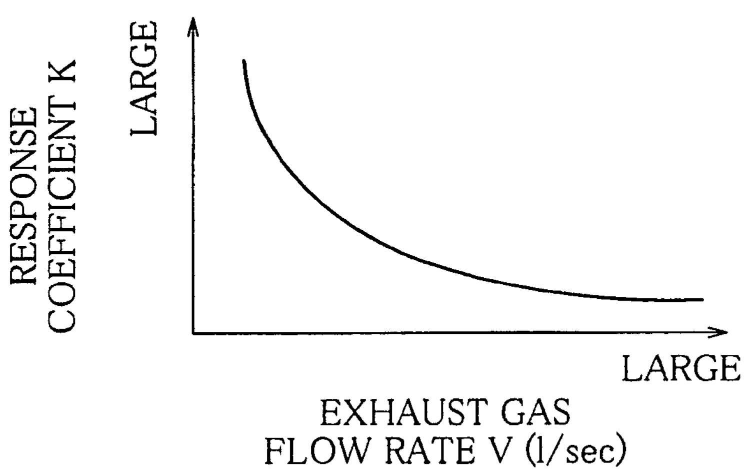
RESPONSE
COEFFICIENT K
LARGE
LARGE
EXHAUST GAS
FLOW RATE V (l/sec)

FIG. 5

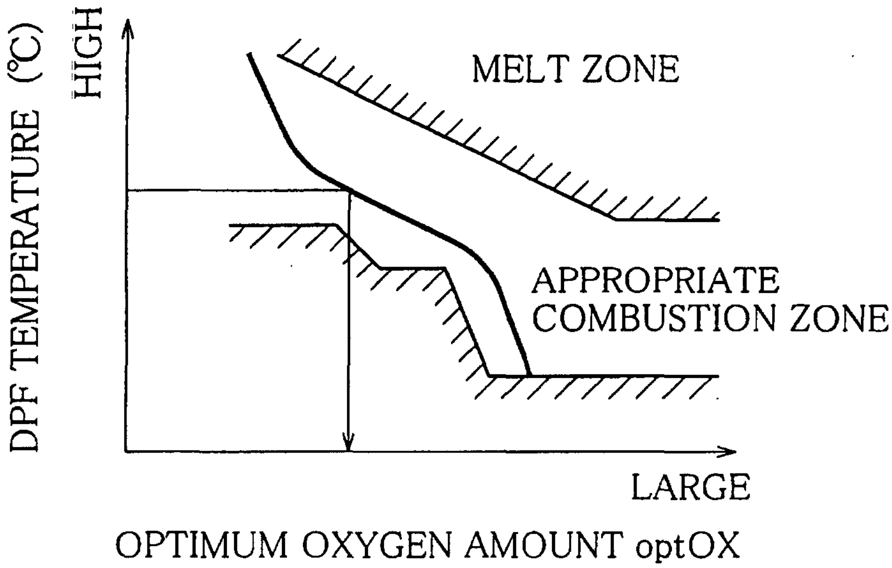
DPF TEMPERATURE (℃)
HIGH
MELT ZONE
APPROPRIATE
COMBUSTION ZONE
LARGE
OPTIMUM OXYGEN AMOUNT optOX

FIG. 6

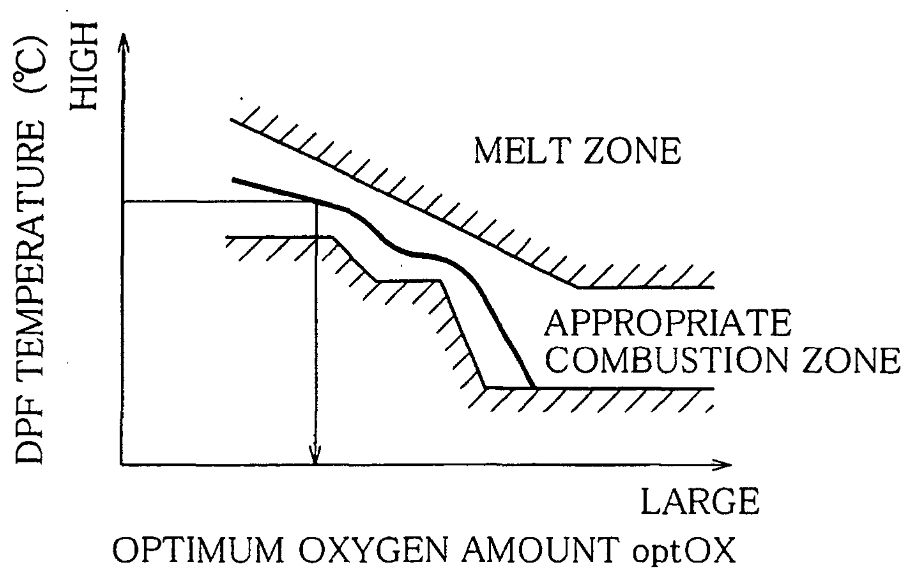
DPF TEMPERATURE (℃)
HIGH
MELT ZONE
APPROPRIATE
COMBUSTION ZONE
LARGE
OPTIMUM OXYGEN AMOUNT optOX

FIG. 7

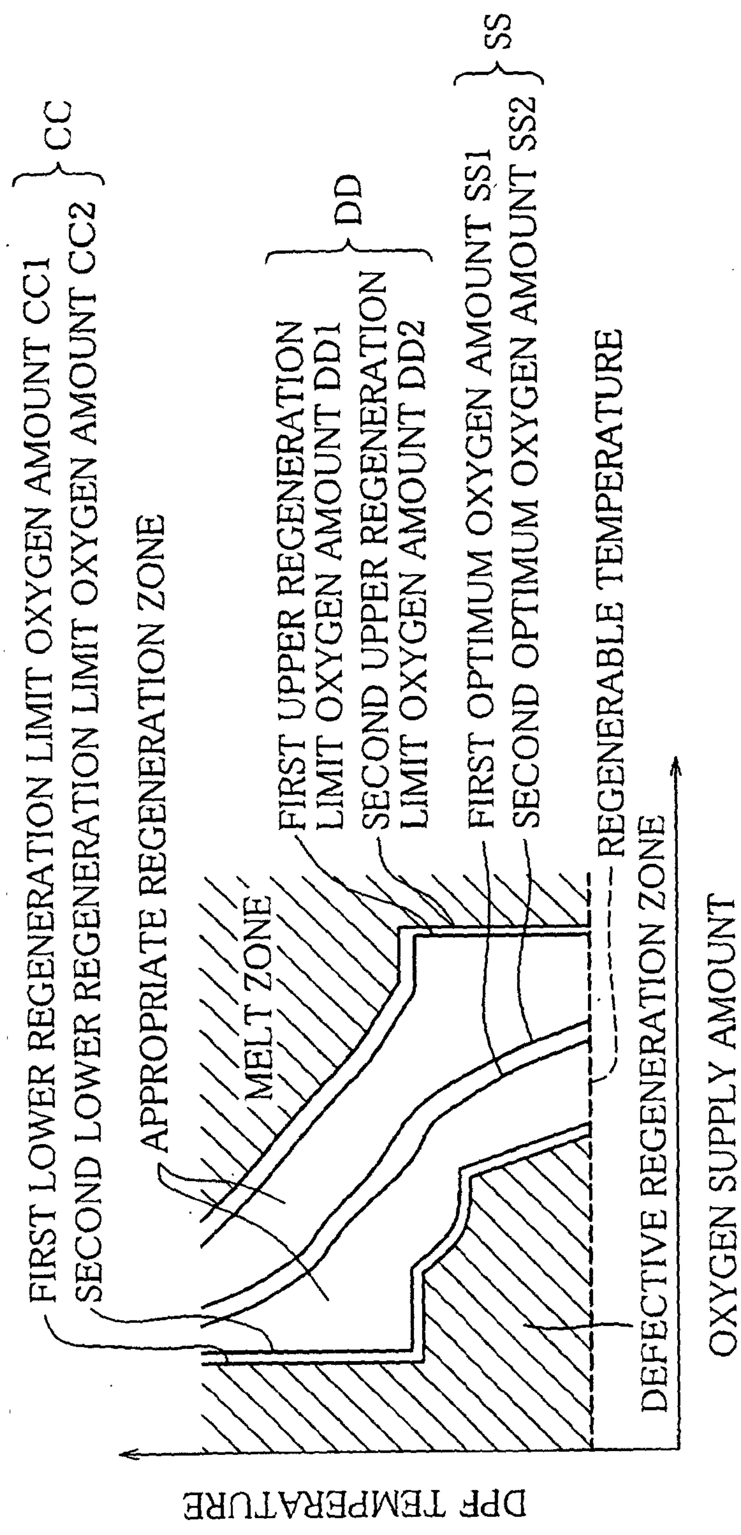
FIRST LOWER REGENERATION LIMIT OXYGEN AMOUNT CC1
SECOND LOWER REGENERATION LIMIT OXYGEN AMOUNT CC2
CC
APPROPRIATE REGENERATION ZONE
MELT ZONE
FIRST UPPER REGENERATION LIMIT OXYGEN AMOUNT DD1
SECOND UPPER REGENERATION LIMIT OXYGEN AMOUNT DD2
DD
FIRST OPTIMUM OXYGEN AMOUNT SS1
SECOND OPTIMUM OXYGEN AMOUNT SS2
SS
REGENERABLE TEMPERATURE
DEFECTIVE REGENERATION ZONE
OXYGEN SUPPLY AMOUNT
DPF TEMPERATURE

FIG. 8

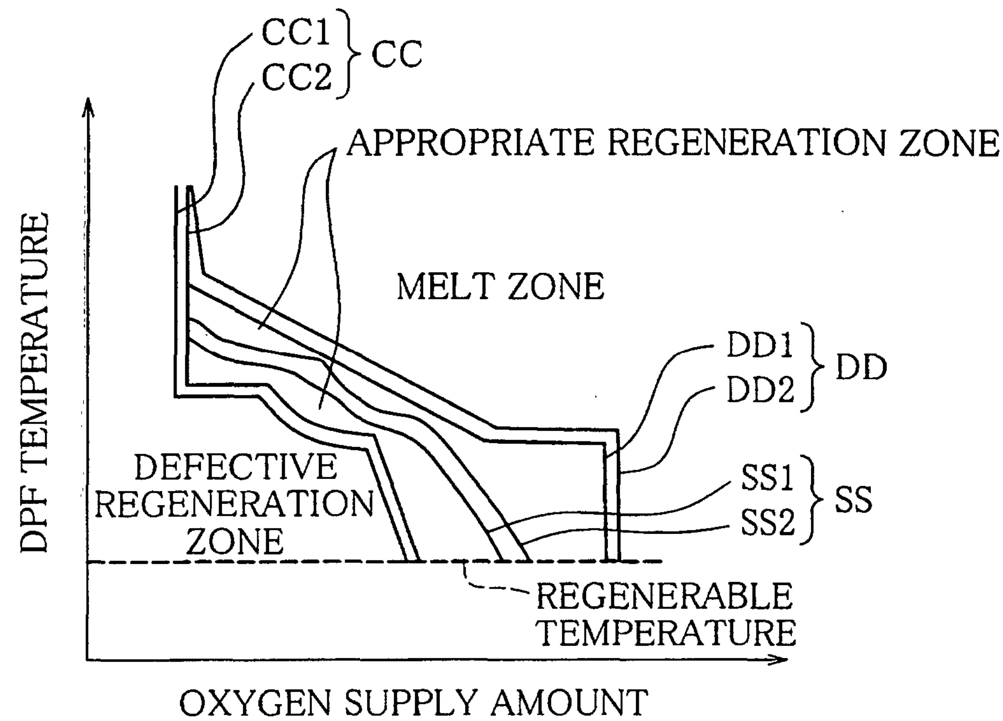
CC1
CC2
CC
APPROPRIATE REGENERATION ZONE
MELT ZONE
DD1
DD2
DD
SS1
SS2
SS
DEFECTIVE
REGENERATION
ZONE
REGENERABLE
TEMPERATURE
DPF TEMPERATURE
OXYGEN SUPPLY AMOUNT

FIG. 9

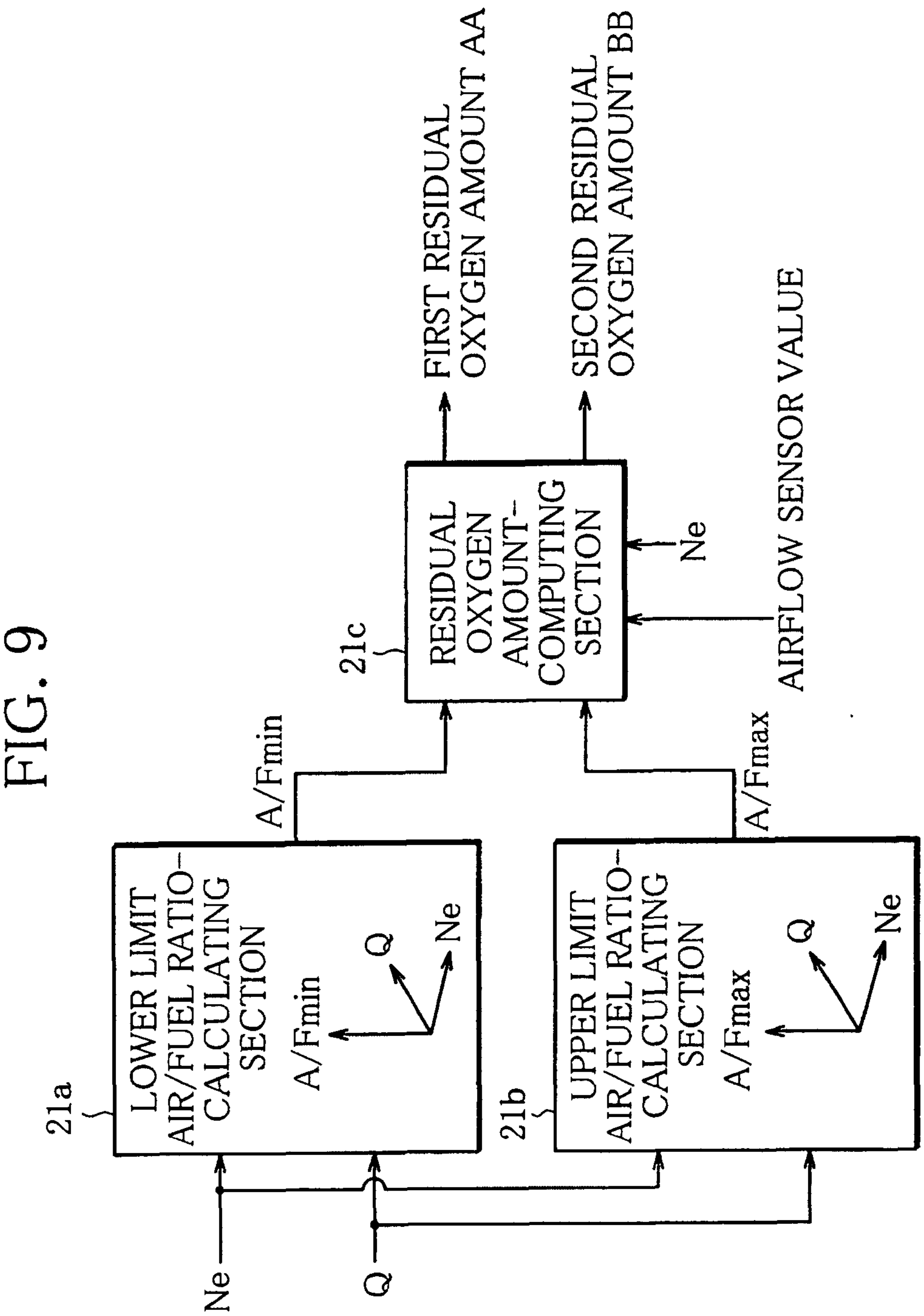
21a
LOWER LIMIT AIR/FUEL RATIO-CALCULATING SECTION
A/Fmin
Q
Ne
21b
UPPER LIMIT AIR/FUEL RATIO-CALCULATING SECTION
A/Fmax
Q
Ne
Ne
Q
A/Fmin
A/Fmax
21c
RESIDUAL OXYGEN AMOUNT-COMPUTING SECTION
Ne
AIRFLOW SENSOR VALUE
FIRST RESIDUAL OXYGEN AMOUNT AA
SECOND RESIDUAL OXYGEN AMOUNT BB

FIG. 10

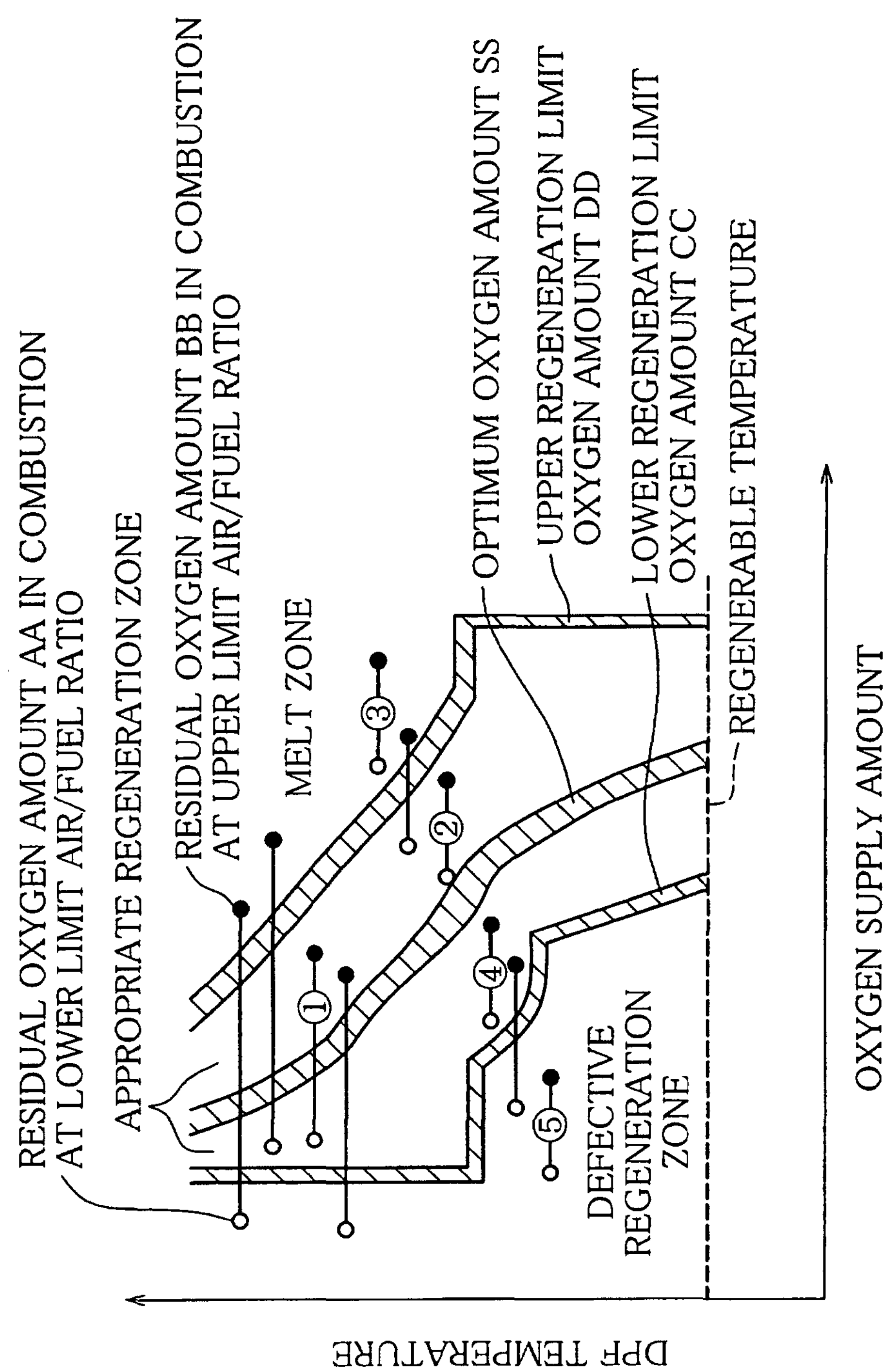
RESIDUAL OXYGEN AMOUNT AA IN COMBUSTION AT LOWER LIMIT AIR/FUEL RATIO
APPROPRIATE REGENERATION ZONE
RESIDUAL OXYGEN AMOUNT BB IN COMBUSTION AT UPPER LIMIT AIR/FUEL RATIO
MELT ZONE
OPTIMUM OXYGEN AMOUNT SS
UPPER REGENERATION LIMIT OXYGEN AMOUNT DD
LOWER REGENERATION LIMIT OXYGEN AMOUNT CC
REGENERABLE TEMPERATURE
DEFECTIVE REGENERATION ZONE
①
②
③
④
⑤
OXYGEN SUPPLY AMOUNT
DPF TEMPERATURE

FIG. 11

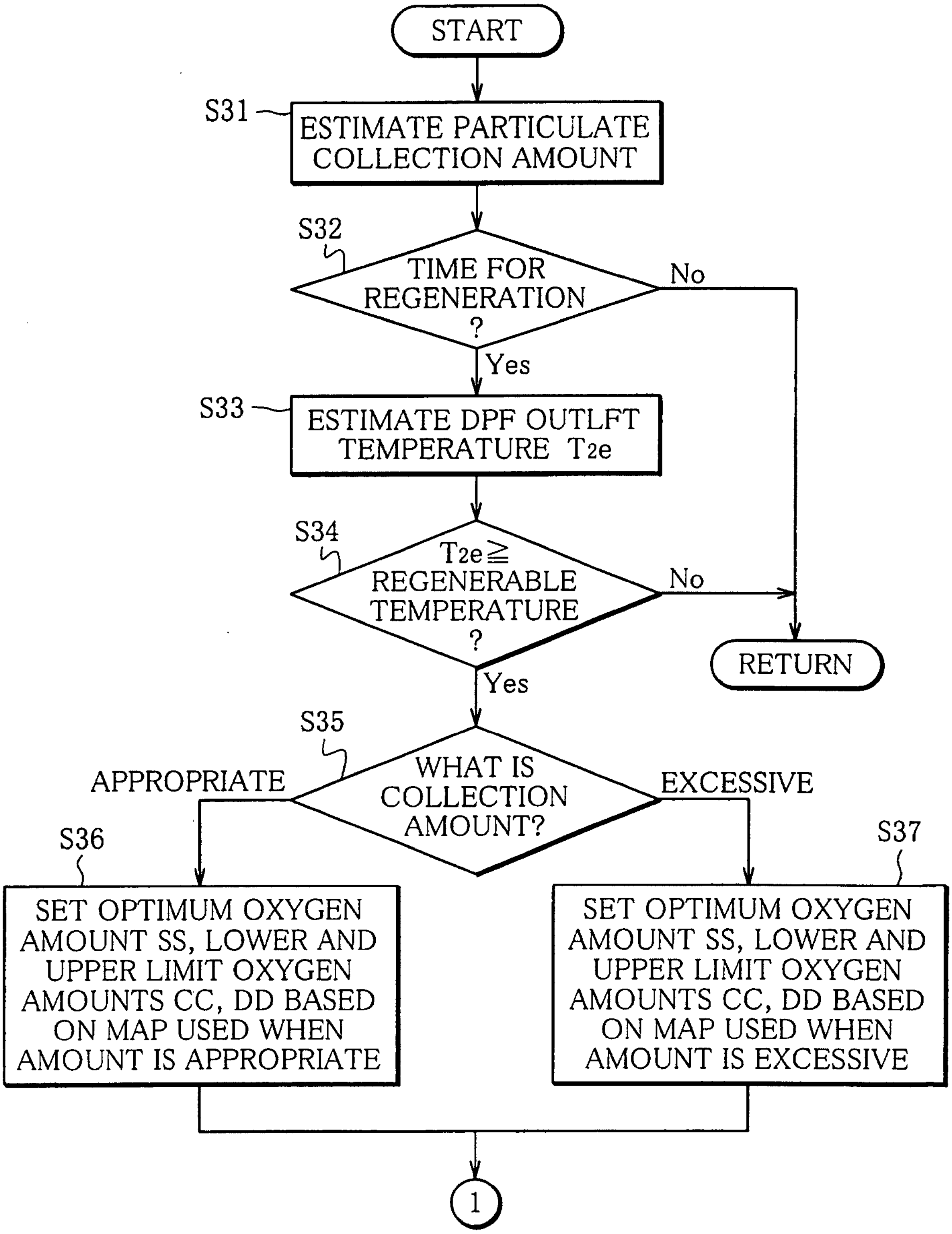
START
S31
ESTIMATE PARTICULATE COLLECTION AMOUNT
S32
TIME FOR REGENERATION ?
No
Yes
S33
ESTIMATE DPF OUTLFT TEMPERATURE T2e
S34
T2e≧ REGENERABLE TEMPERATURE ?
No
Yes
RETURN
S35
WHAT IS COLLECTION AMOUNT?
APPROPRIATE
EXCESSIVE
S36
SET OPTIMUM OXYGEN AMOUNT SS, LOWER AND UPPER LIMIT OXYGEN AMOUNTS CC, DD BASED ON MAP USED WHEN AMOUNT IS APPROPRIATE
S37
SET OPTIMUM OXYGEN AMOUNT SS, LOWER AND UPPER LIMIT OXYGEN AMOUNTS CC, DD BASED ON MAP USED WHEN AMOUNT IS EXCESSIVE
1

FIG. 12

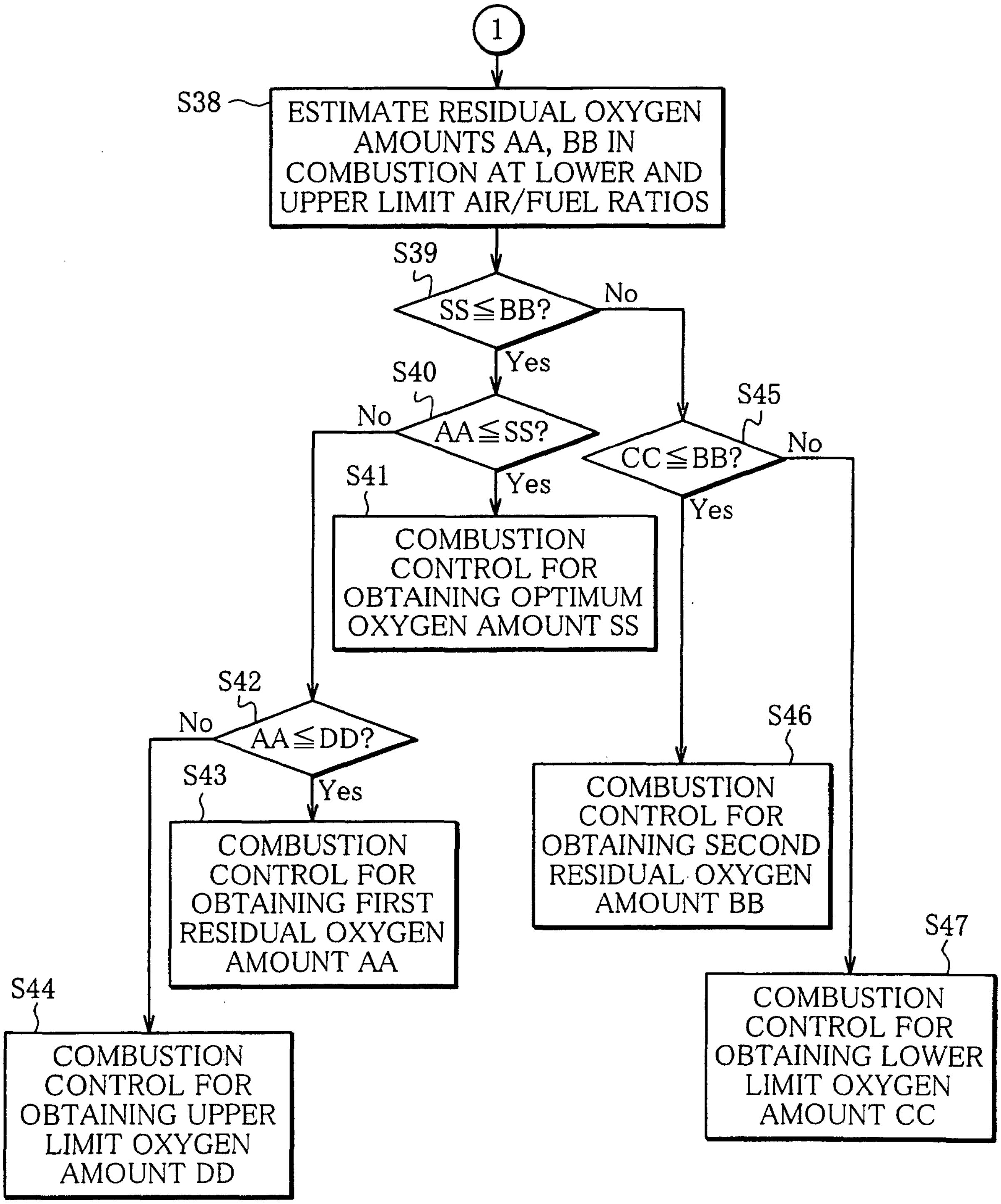
1
S38
ESTIMATE RESIDUAL OXYGEN AMOUNTS AA, BB IN COMBUSTION AT LOWER AND UPPER LIMIT AIR/FUEL RATIOS
S39
SS≦BB?
No
Yes
S40
AA≦SS?
No
Yes
S41
COMBUSTION CONTROL FOR OBTAINING OPTIMUM OXYGEN AMOUNT SS
S45
CC≦BB?
No
Yes
S42
AA≦DD?
No
Yes
S43
COMBUSTION CONTROL FOR OBTAINING FIRST RESIDUAL OXYGEN AMOUNT AA
S44
COMBUSTION CONTROL FOR OBTAINING UPPER LIMIT OXYGEN AMOUNT DD
S46
COMBUSTION CONTROL FOR OBTAINING SECOND RESIDUAL OXYGEN AMOUNT BB
S47
COMBUSTION CONTROL FOR OBTAINING LOWER LIMIT OXYGEN AMOUNT CC

FIG. 13

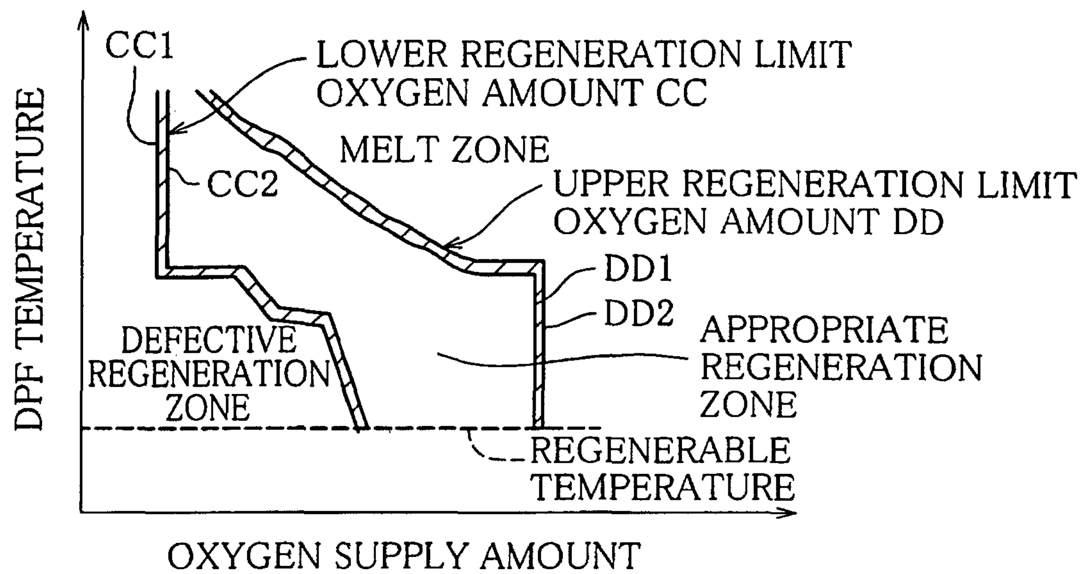
CC1
LOWER REGENERATION LIMIT
OXYGEN AMOUNT CC
MELT ZONE
CC2
UPPER REGENERATION LIMIT
OXYGEN AMOUNT DD
DD1
DD2
APPROPRIATE
REGENERATION
ZONE
DEFECTIVE
REGENERATION
ZONE
REGENERABLE
TEMPERATURE
DPF TEMPERATURE
OXYGEN SUPPLY AMOUNT

FIG. 14

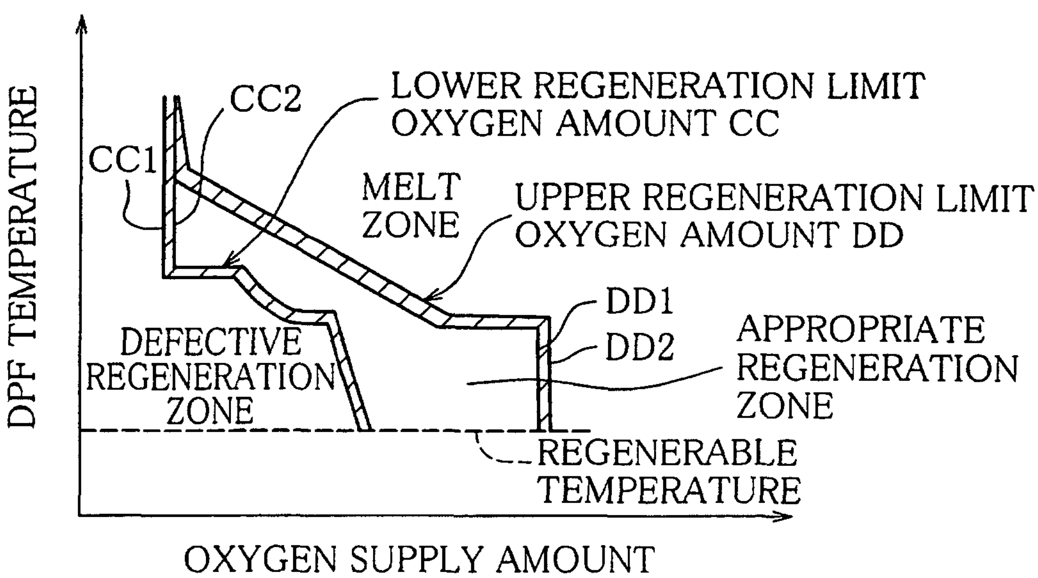
CC2
LOWER REGENERATION LIMIT
OXYGEN AMOUNT CC
CC1
MELT
ZONE
UPPER REGENERATION LIMIT
OXYGEN AMOUNT DD
DD1
DD2
APPROPRIATE
REGENERATION
ZONE
DEFECTIVE
REGENERATION
ZONE
REGENERABLE
TEMPERATURE
DPF TEMPERATURE
OXYGEN SUPPLY AMOUNT

FIG. 15

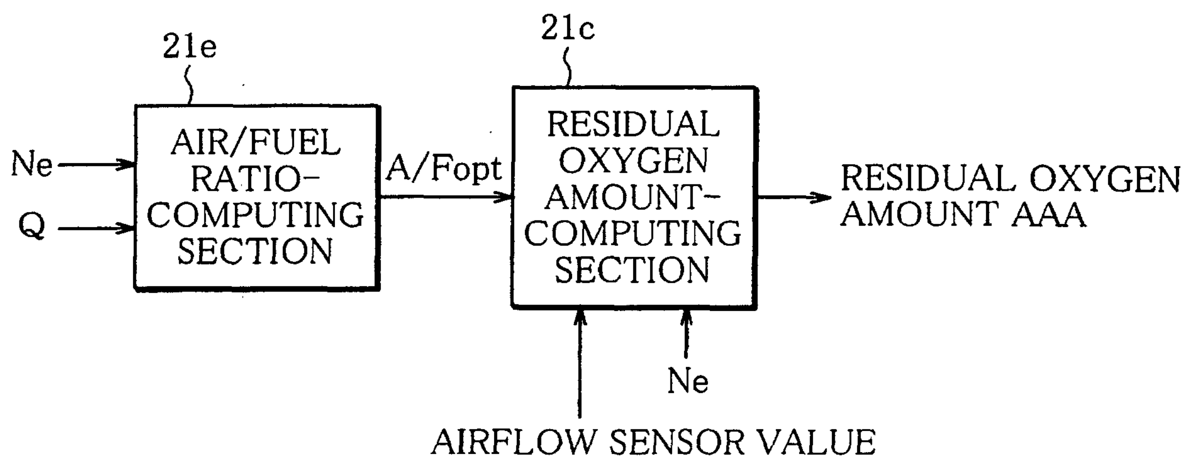
21e
21c
Ne
Q
AIR/FUEL RATIO-COMPUTING SECTION
A/Fopt
RESIDUAL OXYGEN AMOUNT-COMPUTING SECTION
RESIDUAL OXYGEN AMOUNT AAA
Ne
AIRFLOW SENSOR VALUE

FIG. 16

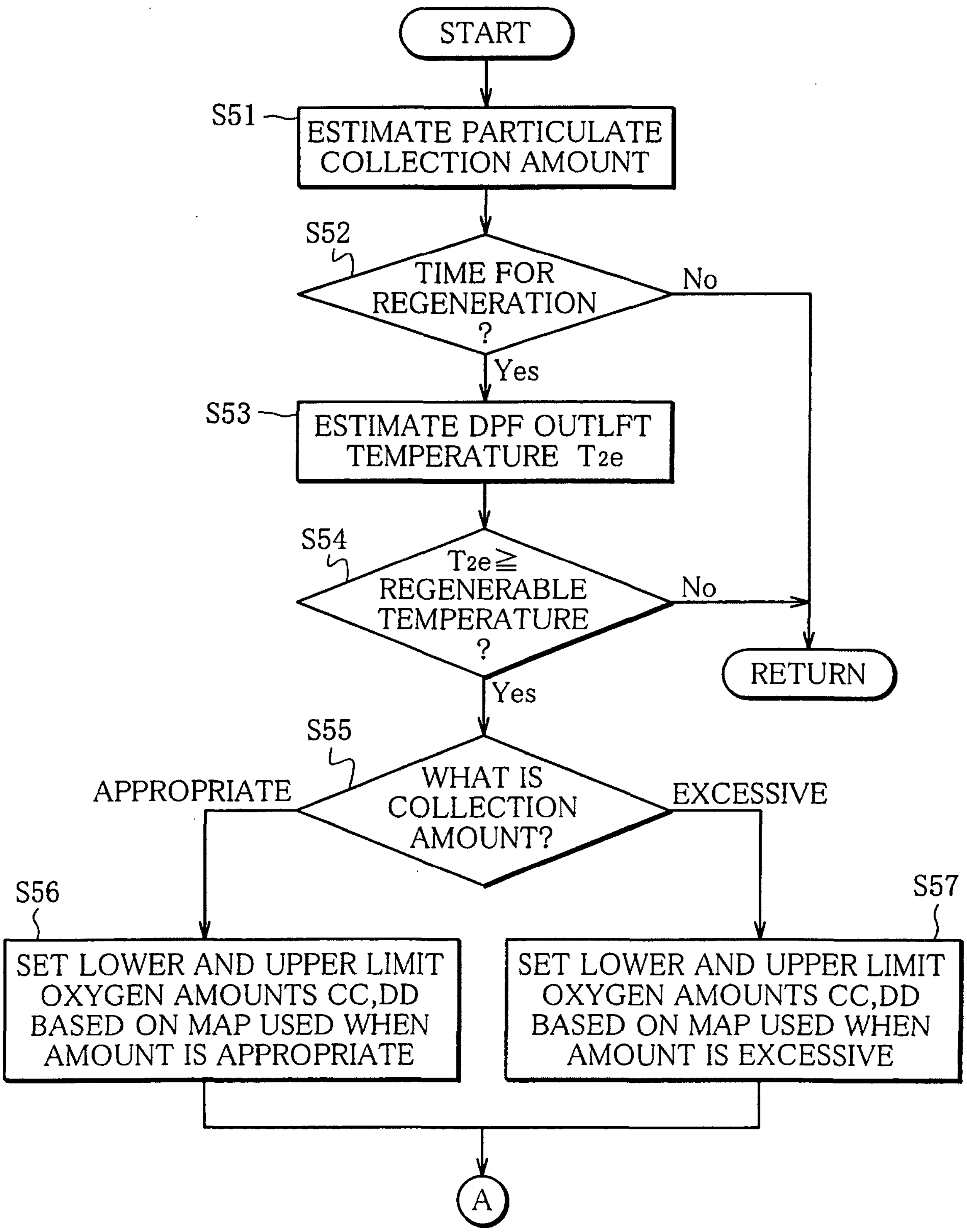
START
S51
ESTIMATE PARTICULATE COLLECTION AMOUNT
S52
TIME FOR REGENERATION ?
No
Yes
S53
ESTIMATE DPF OUTLFT TEMPERATURE T2e
S54
T2e≧ REGENERABLE TEMPERATURE ?
No
Yes
RETURN
S55
WHAT IS COLLECTION AMOUNT?
APPROPRIATE
EXCESSIVE
S56
SET LOWER AND UPPER LIMIT OXYGEN AMOUNTS CC,DD BASED ON MAP USED WHEN AMOUNT IS APPROPRIATE
S57
SET LOWER AND UPPER LIMIT OXYGEN AMOUNTS CC,DD BASED ON MAP USED WHEN AMOUNT IS EXCESSIVE
A

FIG. 17

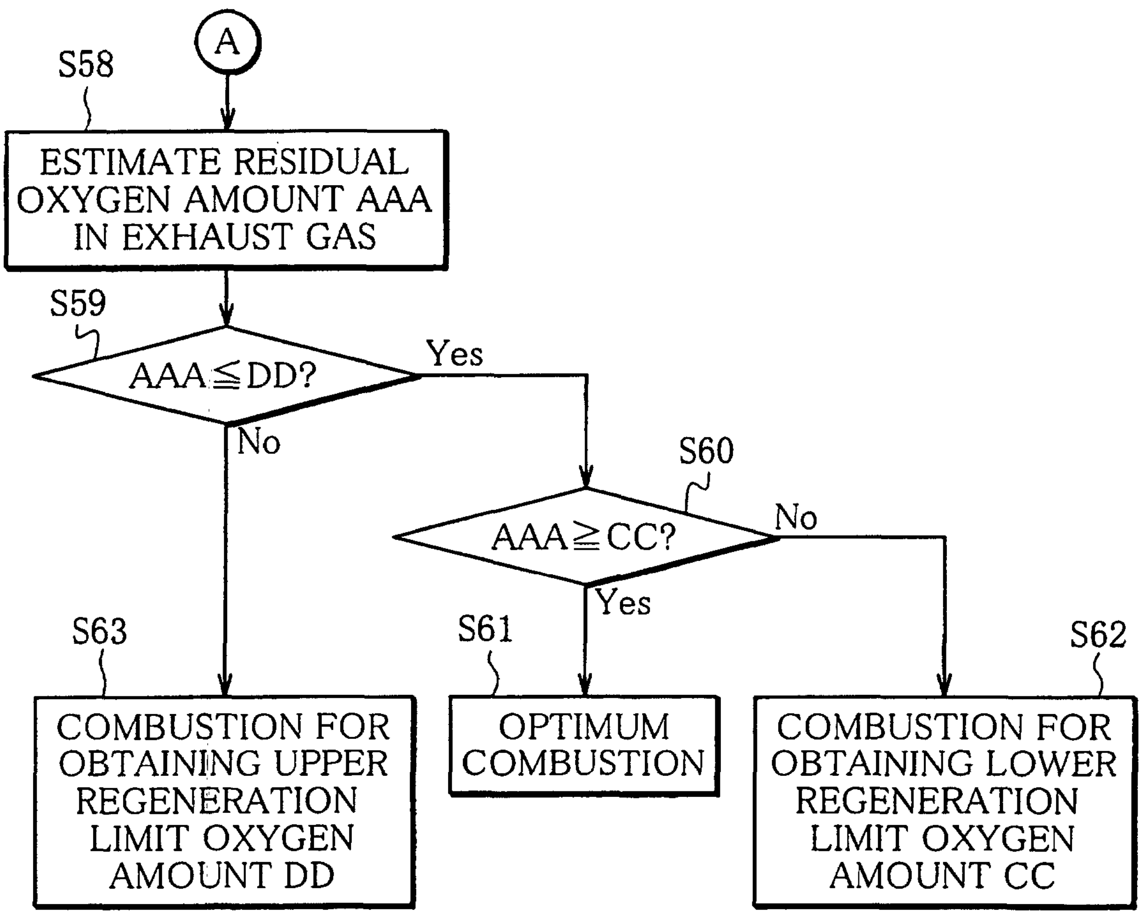
A
S58
ESTIMATE RESIDUAL OXYGEN AMOUNT AAA IN EXHAUST GAS
S59
AAA≦DD?
Yes
No
S60
AAA≧CC?
No
Yes
S63
COMBUSTION FOR OBTAINING UPPER REGENERATION LIMIT OXYGEN AMOUNT DD
S61
OPTIMUM COMBUSTION
S62
COMBUSTION FOR OBTAINING LOWER REGENERATION LIMIT OXYGEN AMOUNT CC

FIG. 18

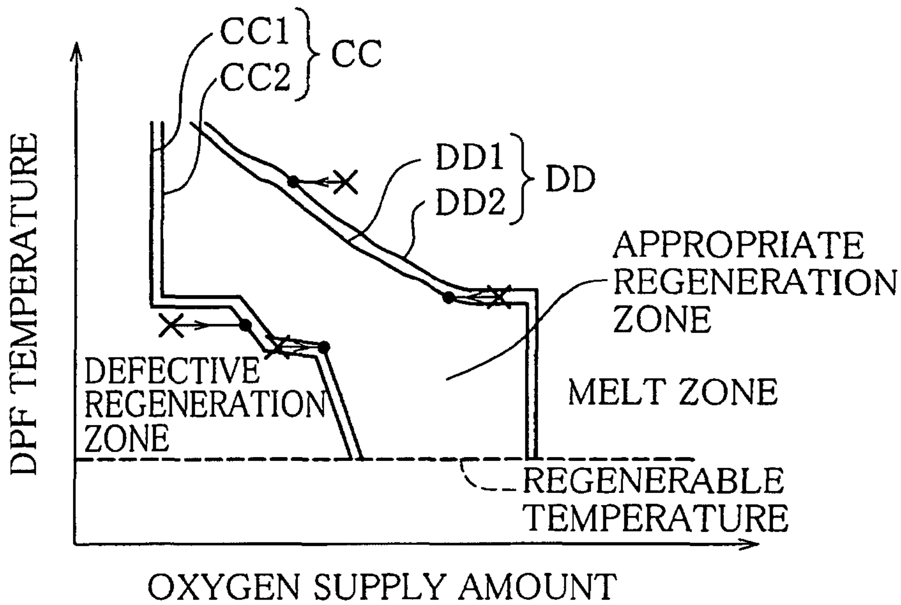
CC1
CC2
CC
DD1
DD2
DD
APPROPRIATE REGENERATION ZONE
DEFECTIVE REGENERATION ZONE
MELT ZONE
REGENERABLE TEMPERATURE
DPF TEMPERATURE
OXYGEN SUPPLY AMOUNT

FIG. 19

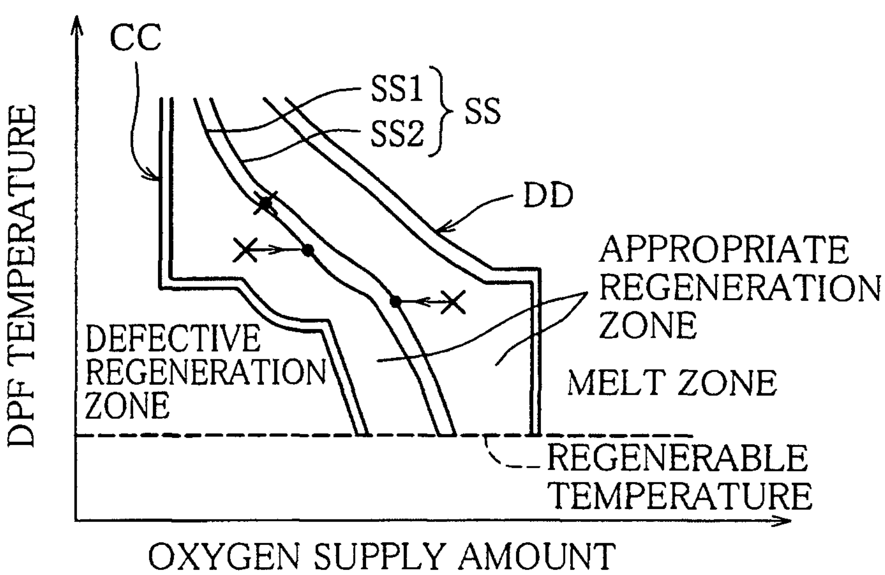
CC
SS1
SS2
SS
DD
APPROPRIATE REGENERATION ZONE
DEFECTIVE REGENERATION ZONE
MELT ZONE
REGENERABLE TEMPERATURE
DPF TEMPERATURE
OXYGEN SUPPLY AMOUNT

## INTERNATIONAL SEARCH REPORT

International application No.
PCT/JP02/07462

A. CLASSIFICATION OF SUBJECT MATTER
Int.Cl[7] F01N3/02

According to International Patent Classification (IPC) or to both national classification and IPC

B. FIELDS SEARCHED

Minimum documentation searched (classification system followed by classification symbols)
Int.Cl[7] F01N3/02

Documentation searched other than minimum documentation to the extent that such documents are included in the fields searched

Jitsuyo Shinan Koho 1922-1996 Jitsuyo Shinan Toroku Koho 1996-2002
Kokai Jitsuyo Shinan Koho 1971-2002 Toroku Jitsuyo Shinan Koho 1994-2002

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 6-137133 A (Nippondenso Co., Ltd.),<br>17 May, 1994 (17.05.94),<br>Par. Nos. [0043] to [0045]; Fig. 3<br>(Family: none) | 1-3,5,11-14<br>4,6-10 |
| Y | EP 632189 A (KABUSHIKI KAISYA TOYODA JIDOUSHOKKI SEISAKUSHO),<br>04 January, 1995 (04.01.95),<br>Column 17, lines 40 to 51<br>& JP 7-83031 A | 1-3,5,11-14 |
| Y | EP 976915 A (TOYOTA JIDOSYA KABUSHIKI KAISYA),<br>02 February, 2000 (02.02.00),<br>Fig. 4<br>& JP 2000-45755 A | 2,14 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 22 October, 2002 (22.10.02) | 05 November, 2002 (05.11.02) |
| Name and mailing address of the ISA/<br>Japanese Patent Office | Authorized officer |
| Facsimile No. | Telephone No. |

Form PCT/ISA/210 (second sheet) (July 1998)

## INTERNATIONAL SEARCH REPORT

International application No.
PCT/JP02/07462

C (Continuation). DOCUMENTS CONSIDERED TO BE RELEVANT

| Category* | Citation of document, with indication, where appropriate, of the relevant passages | Relevant to claim No. |
|---|---|---|
| Y | JP 9-68033 A (Toyoda Automatic Loom Works, Ltd.), 11 March, 1997 (11.03.97), Fig. 2 (Family: none) | 11 |

Form PCT/ISA/210 (continuation of second sheet) (July 1998)